# EUROPEAN PATENT SPECIFICATION

(11) **EP 4 265 656 B1**
(45) Date of publication and mention of the grant of the patent: **18.09.2024**
(21) Application number: 22169270.0
(22) Date of filing: 21.04.2022
(51) Int. Cl.: C08F 212/08, C08F 257/02, C09J 125/10, C09J 125/14

(54) **POLYMER LATEX FOR WOOD ADHESIVES**
POLYMERLATEX FÜR HOLZKLEBSTOFFE
LATEX EN POLYMÈRE POUR COLLES À BOIS

(43) Date of publication of application: 25.10.2023
(73) Proprietor: Synthomer Deutschland GmbH, 45768 Marl (DE)
(72) Inventor: Böhm, Nicolai, 45788 Marl (DE)
(74) Representative: f & e patent

(56) References cited:
- WO-A1-2011/124651
- CN-A- 112 724 884
- JP-A- 2005 139 266
- JP-B2- 6 302 286
- US-A- 4 001 163
- US-A1- 2011 160 350
- US-A1- 2016 272 794
- US-A1- 2022 033 692

## Description

The present invention relates to a polymer latex for use in an adhesive composition, to a method for preparing and the use of the polymer latex. Furthermore, in particular but not exclusively, the present invention is directed to an aqueous adhesive composition comprising such polymer latex and a method of preparing such aqueous adhesive composition.

### Background of the invention:

D4 wood adhesives require specific durability as they are used in interior areas with frequent long-term exposure to running or condensed water and/or exterior areas exposed to weather. Suitable adhesives are not only excellent in dry adhesive performance, but also in secondary performance such as water-resistant adhesion, boiling-water-resistant adhesion, and heat-resistant adhesion. Conventional water-based polymer isocyanate adhesives are inadequate in water-resistant adhesion, especially boiling water-resistant adhesion, although they are satisfactory in dry adhesion. Another challenge is an environment that is more severe than conventional environments, such as high temperatures or high humidity for extended periods of time.

In addition to the requirement of adhesion, an extension of stability (pot life) of the adhesive itself after an isocyanate compound is blended is desired.

EP 1 754 766 A1 relates to a water-based polymer dispersion for isocyanate-crosslinked adhesives comprising a polymer (1) which is obtained by emulsion polymerization of a monomer composition comprising at least one monomer selected from the group consisting of an aromatic vinyl monomer and a (meth)acrylate monomer, a crosslinkable monomer, and a different monomer; and a polymer (2) which is obtained by emulsion polymerization of a monomer composition comprising at least one monomer selected from the group consisting of an aromatic vinyl monomer and a (meth)acrylate monomer, a hydroxyl group-containing vinyl monomer, an ethylenically unsaturated carboxylic acid monomer, and a different monomer, wherein the polymers (1) and (2) have a Tg difference of 20 to 80°C.

JP 2005 139266 A relates to a copolymer latex for aqueous polymer isocyanate-based adhesives.

It is an object of the present invention to provide a polymer latex for use in adhesive compositions, which provide long pot life after mixing with the hardener component and to provide a high wood joint strength, which is suitable for use in wood glue and in particular in D4 wood glue.

### Summary of the invention:

The following clauses summarize some aspects of the present invention.

According to a first aspect, the present invention relates to a polymer latex for use in an adhesive composition, obtainable by free-radical emulsion polymerization of a mixture of ethylenically unsaturated monomers comprising:
(a) a vinyl aromatic monomer;
(b) a conjugated diene monomer; and
(c) an ethylenically unsaturated monomer having an acid and/or a hydroxyl functional group;
wherein the weight ratio of the vinyl aromatic monomer (a) to the conjugated diene monomer (b) is in the range of from 1.60 to 2.30; and wherein the polymer latex has a median particle size of at least 220 nm, wherein the median particle size is determined by dynamic light scattering according to ISO 22412:2017.

The sum of the vinyl aromatic monomer (a) and the conjugated diene monomer (b) may be in the range of from 85.0 to 99.0 wt.-%, preferably from 90.0 to 98.0 wt.-%, based on the total weight of the monomers in the monomer mixture.

The mixture of ethylenically unsaturated monomers may comprise:
(a) 40 to 80 wt.-%, preferably 50 to 75 wt.-%, more preferably 55 to 70 wt.-% of the vinyl aromatic monomer, based on the total weight of the monomers in the monomer mixture.

The vinyl aromatic monomer (a) may be selected from styrene, alpha-methyl styrene, vinyl toluene and combinations thereof. The vinyl aromatic monomer (a) may be selected from styrene.

The mixture of ethylenically unsaturated monomers may comprise:
(b) 15 to 50 wt.-%, preferably 20 to 45 wt.-%, more preferably 25 to 40 wt.-% of the conjugated diene monomer, based on the total weight of the monomers in the monomer mixture.

The conjugated diene monomer (b) may be selected from 1,3-butadiene, isoprene, 2,3-dimethyl-1,3-butadiene, 2-chloro-1,3-butadiene, 1,3-pentadiene, 1,3-hexadiene, 2,4-hexadiene, 1,3-octadiene, 2-methyl-1,3-pentadiene, 2,3-dimethyl-1,3-pentadiene, 3,4-dimethyl-1,3-hexadiene, 2,3-diethyl-1,3-butadiene, 4,5-diethyl-1,3-octadiene, 3-butyl-1,3-octadiene, 3,7-dimethyl-1,3,6-octatriene, 2-methyl-6-methylene-1,7-octadiene, 7-methyl-3-methylene-1,6-octadiene, 1,3,7-octatriene, 2-ethyl-1,3-butadiene, 2-amyl-1,3-butadiene, 3,7-dimethyl-1,3,7-octatriene, 3,7-dimethyl-1,3,6-octatriene, 3,7,11-trimethyl-1,3,6,10-dodecatetraene, 7,11 -dimethyl-3-methylene-1,6,10-dodecatriene, 2,6-dimethyl-2,4,6-octatriene, 2-phenyl-1,3-butadiene, 2-methyl-3-isopropyl-1,3-butadiene, 1,3-cyclohexadiene, myrcene, ocimene, farnesene and combinations thereof. The conjugated diene monomer (b) may be selected from 1,3-butadiene, isoprene and combinations thereof. The conjugated diene monomer (b) may be selected from 1,3-butadiene.

The mixture of ethylenically unsaturated monomers may comprise:
(c) 0.2 to 6.0 wt.-%, preferably 0.3 to 5.0 wt.-%, more preferably 0.5 to 4.0 wt.-% of the ethylenically unsaturated monomer having an acid and/or a hydroxyl functional group, based on the total weight of the monomers in the monomer mixture.

The ethylenically unsaturated monomer having an acid functional group (c) may be selected from ethylenically unsaturated carboxylic acid monomers, ethylenically unsaturated sulfonic acid monomers, ethylenically unsaturated phosphorous-containing acid monomers. The ethylenically unsaturated monomer having an acid functional group (c) may be selected from (meth)acrylic acid, crotonic acid, fumaric acid, itaconic acid, maleic acid, maleic anhydride, vinyl acetic acid, vinyl lactic acid, vinyl sulfonic acid, styrene sulfonic acid, 2-carboxy ethyl (meth)acrylate, phenyl vinyl sulfonate, sodium 4-vinyl benzenesulfonate, 2-methyl-2-propene-1-sulfonic acid, 2-propene-1-sulfonic acid, 4-styrenesulfonic acid, 2-acrylamido-2-methyl-1-propanesulfonic acid, vinyl phosphonic acid, dimethyl vinyl phosphonate, diethyl vinyl phosphonate, diethyl allylphosphonate, allylphosphonic acid, and combinations thereof. The ethylenically unsaturated monomer having an acid functional group (c) may be selected from (meth)acrylic acid, itaconic acid, and combinations thereof.

The ethylenically unsaturated monomer having a hydroxyl functional group (c) may be selected from allyl alcohol, vinyl alcohol, N-methylol (meth)acrylamide, 1-penten-3-ol, hydroxyalkyl esters of ethylenically unsaturated acids, such as hydroxyethyl (meth)acrylate, hydroxypropyl (meth)acrylate, hydroxybutyl (meth)acrylate and hydroxyethylcaprolactone acrylate, and combinations thereof. The ethylenically unsaturated monomer having a hydroxyl functional group (c) may be selected from hydroxyalkyl esters of ethylenically unsaturated acids, such as hydroxyethyl (meth)acrylate, hydroxypropyl (meth)acrylate, hydroxybutyl (meth)acrylate and hydroxyethylcaprolactone acrylate. The ethylenically unsaturated monomer having a hydroxyl functional group (c) may be selected from hydroxyethyl (meth)acrylate, hydroxypropyl (meth)acrylate, hydroxybutyl methacrylate, and combinations thereof.

The ethylenically unsaturated monomer having an acid and hydroxy functional group (c) may be selected from 3-allyloxy-2-hydroxy-1-propanesulfonic acid.

The weight ratio of the vinyl aromatic monomer (a) to the conjugated diene monomer (b) may be in the range of from 1.70 to 2.10.

The polymer latex may have a median particle size of at least 230 nm, preferably of at least 250 nm.

The mixture of ethylenically unsaturated monomers may comprise 0.05 to 3.0 wt.-%, preferably 0.10 to 2.0 wt.-%, more preferably 0.15 to 1.5 wt.-% of a chain transfer agent, wherein the weight percentage is based on the total amount of monomers in the monomer mixture.

The chain transfer agent may be selected from n-dodecyl mercaptan, carbon tetrachloride, carbon tetrabromide, bromotrichloro methane, 4-methylbenzenethiol, isooctyl 3-mercaptopropionate, tert-nonyl mercaptan, 4,4'-thiobisbenzenethiol, tert-dodecyl mercaptan, alpha-methyl styrene dimer, thioglycolic acid, 2-ethylhexyl thioglycolate, butyl 3-mercaptopropionate, 1,8-dimercapto-3,6-dioxa octane and combinations thereof, preferably tert-dodecyl mercaptan.

The mixture of ethylenically unsaturated monomers may further comprise (d) 0 to 20 wt.-% of an ethylenically unsaturated monomer different from (a) to (c), based on the total weight of the monomers in the monomer mixture; wherein the ethylenically unsaturated monomer different from (a) to (c) preferably is selected from
(d1) an ethylenically unsaturated nitrile compound, preferably selected from (meth)acrylonitrile, alpha-cyanoethyl acrylonitrile, fumaronitrile, alpha-chloronitrile and combinations thereof;
(d2) an alkyl ester of ethylenically unsaturated acid, preferably selected from methyl (meth)acrylate, ethyl (meth)acrylate, propyl (meth)acrylate, butyl (meth)acrylate, 2-ethylhexyl (meth)acrylate, and combinations thereof;
(d3) an ethylenically unsaturated compound bearing a primary or secondary amino group, preferably selected from (meth)acrylamide, 2-amino ethyl (meth)acrylate hydrochloride, 2-amino ethyl (meth)acrylamide hydrochloride, N-ethyl (meth)acrylamide, N-(3-amino propyl) (meth)acrylamide hydrochloride, N-hydroxyethyl (meth)acrylamide, N-3-(dimethylamino) propyl (meth)acrylamide, [3-(methacryloylamino)propyl] trimethylammonium, N-[tris(hydroxymethyl) methyl] (meth)acrylamide, N-phenylacrylamide, alkylacrylamide, methacrylamide polyethylene glycol) amine hydrochloride, and combinations thereof and combinations thereof.

According to a further aspect, the invention relates to a method for preparing a polymer latex, preferably as discussed above, for the use in adhesives, comprising:
polymerizing by free-radical emulsion polymerization of a mixture of ethylenically unsaturated monomers comprising:
   (a) a vinyl aromatic monomer;
   (b) a conjugated diene monomer; and
   (c) an ethylenically unsaturated monomer having an acid and/or a hydroxyl functional group;
wherein the weight ratio of the vinyl aromatic monomer (a) to the conjugated diene monomer (b) is in the range of from 1.60 to 2.30; and wherein the polymer latex has a median particle size of at least 220 nm, wherein the median particle size is determined by dynamic light scattering according to ISO 22412:2017.

The weight ratio of the vinyl aromatic monomer (a) to the conjugated diene monomer (b) may be in the range of from 1.70 to 2.10.

The sum of the vinyl aromatic monomer (a) and the conjugated diene monomer (b) may be in the range of from 85.0 to 99.0 w.-%, preferably from 90.0 to 98.0 wt.-%, based on the total weight of the monomers in the monomer mixture.

The mixture of ethylenically unsaturated monomers may comprise:
(a) 40 to 80 wt.-%, preferably 50 to 75 wt.-%, more preferably 55 to 70 wt.-% of the vinyl aromatic monomer, based on the total weight of the monomers in the monomer mixture.

The vinyl aromatic monomer (a) may be selected from styrene, alpha-methyl styrene, vinyl toluene and combinations thereof. The vinyl aromatic monomer (a) may be selected from styrene.

The mixture of ethylenically unsaturated monomers may comprise:
(b) 15 to 50 wt.-%, preferably 20 to 45 wt.-%, more preferably 25 to 40 wt.-% of the conjugated diene monomer, based on the total weight of the monomers in the monomer mixture.

The conjugated diene monomer (b) may be selected from 1,3-butadiene, isoprene, 2,3-dimethyl-1,3-butadiene, 2-chloro-1,3-butadiene, 1,3-pentadiene, 1,3-hexadiene, 2,4-hexadiene, 1,3-octadiene, 2-methyl-1,3-pentadiene, 2,3-dimethyl-1,3-pentadiene, 3,4-dimethyl-1,3-hexadiene, 2,3-diethyl-1,3-butadiene, 4,5-diethyl-1,3-octadiene, 3-butyl-1,3-octadiene, 3,7-dimethyl-1,3,6-octatriene, 2-methyl-6-methylene-1,7-octadiene, 7-methyl-3-methylene-1,6-octadiene, 1,3,7-octatriene, 2-ethyl-1,3-butadiene, 2-amyl-1,3-butadiene, 3,7-dimethyl-1,3,7- octatriene, 3,7-dimethyl-1,3,6-octatriene, 3,7,11- trimethyl-1,3,6,10-dodecatetraene, 7,11-dimethyl-3-methylene-1,6,10-dodecatriene, 2,6-dimethyl-2,4,6-octatriene, 2-phenyl-1,3-butadiene, 2-methyl-3-isopropyl-1,3-butadiene, 1,3-cyclohexadiene, myrcene, ocimene, farnesene and combinations thereof. The conjugated diene monomer (b) may be selected from 1,3-butadiene, isoprene and combinations thereof. The conjugated diene monomer (b) may be selected from 1,3-butadiene.

The mixture of ethylenically unsaturated monomers may comprise:
(c) 0.2 to 6.0 wt.-%, preferably 0.3 to 5.0 wt.-%, more preferably 0.5 to 4.0 wt.-% of the ethylenically unsaturated monomer having an acid and/or a hydroxyl functional group, based on the total weight of the monomers in the monomer mixture.

The ethylenically unsaturated monomer having an acid functional group (c) may be selected from ethylenically unsaturated carboxylic acid monomers, ethylenically unsaturated sulfonic acid monomers, ethylenically unsaturated phosphorous-containing acid monomers. The ethylenically unsaturated monomer having an acid functional group (c) may be selected from (meth)acrylic acid, crotonic acid, fumaric acid, itaconic acid, maleic acid, maleic anhydride, vinyl acetic acid, vinyl lactic acid, vinyl sulfonic acid, styrene sulfonic acid, 2-carboxy ethyl (meth)acrylate, phenyl vinyl sulfonate, sodium 4-vinyl benzenesulfonate, 2-methyl-2-propene-1-sulfonic acid, 2-propene-1-sulfonic acid, 4-styrenesulfonic acid, 2-acrylamido-2-methyl-1-propanesulfonic acid, vinyl phosphonic acid, dimethyl vinyl phosphonate, diethyl vinyl phosphonate, diethyl allylphosphonate, allylphosphonic acid, and combinations thereof. The ethylenically unsaturated monomer having an acid functional group (c) may be selected from (meth)acrylic acid, itaconic acid, and combinations thereof.

The ethylenically unsaturated monomer having a hydroxyl functional group (c) may be selected from allyl alcohol, vinyl alcohol, N-methylol (meth)acrylamide, 1-penten-3-ol, hydroxyalkyl esters of ethylenically unsaturated acids, such as hydroxyethyl (meth)acrylate, hydroxypropyl (meth)acrylate, hydroxybutyl (meth)acrylate and hydroxyethylcaprolactone acrylate, and combinations thereof. The ethylenically unsaturated monomer having a hydroxyl functional group (c) may be selected from hydroxyalkyl esters of ethylenically unsaturated acids, such as hydroxyethyl (meth)acrylate, hydroxypropyl (meth)acrylate, hydroxybutyl (meth)acrylate and hydroxyethylcaprolactone acrylate. The ethylenically unsaturated monomer having a hydroxyl functional group (c) may be selected from hydroxyethyl (meth)acrylate, hydroxypropyl (meth)acrylate, hydroxybutyl methacrylate, and combinations thereof.

The ethylenically unsaturated monomer having an acid and hydroxy functional group (c) may be selected from 3-allyloxy-2-hydroxy-1-propanesulfonic acid.

The weight ratio of the vinyl aromatic monomer (a) to the conjugated diene monomer (b) may be in the range of from 1.70 to 2.10.

The polymer latex may have a median particle size of at least 230 nm, preferably of at least 250 nm.

The mixture of ethylenically unsaturated monomers may comprise 0.05 to
3.0 wt.-%, preferably 0.10 to 2.0 wt.-%, more preferably 0.15 to 1.5 wt.-% of a chain transfer agent, wherein the weight percentage is based on the total amount of monomers in the monomer mixture. The chain transfer agent may be selected from n-dodecyl mercaptan, carbon tetrachloride, carbon tetrabromide, bromotrichloro methane, 4-methylbenzenethiol, isooctyl 3-mercaptopropionate, tert-nonyl mercaptan, 4,4'-thiobisbenzenethiol, tert-dodecyl mercaptan, alpha-methyl styrene dimer, thioglycolic acid, 2-ethylhexyl thioglycolate, butyl 3-mercaptopropionate, 1,8-dimercapto-3,6-dioxa octane and combinations thereof, preferably tert-dodecyl mercaptan.

The mixture of ethylenically unsaturated monomers may further comprise (d) 0 to 20 wt.-% of an ethylenically unsaturated monomer different from (a) to (c), based on the total weight of the monomers in the monomer mixture; wherein the ethylenically unsaturated monomer different from (a) to (c) preferably is selected from
(d1) an ethylenically unsaturated nitrile compound, preferably selected from (meth)acrylonitrile, alpha-cyanoethyl acrylonitrile, fumaronitrile, alpha-chloronitrile and combinations thereof;
(d2) an alkyl ester of ethylenically unsaturated acid, preferably selected from methyl (meth)acrylate, ethyl (meth)acrylate, propyl (meth)acrylate, butyl (meth)acrylate, 2-ethylhexyl (meth)acrylate, and combinations thereof;
(d3) an ethylenically unsaturated compound bearing a primary or secondary amino group, preferably selected from (meth)acrylamide, 2-amino ethyl (meth)acrylate hydrochloride, 2-amino ethyl (meth)acrylamide hydrochloride, N-ethyl (meth)acrylamide, N-(3-amino propyl) (meth)acrylamide hydrochloride, N-hydroxyethyl (meth)acrylamide, N-3-(dimethylamino) propyl (meth)acrylamide, [3-(methacryloylamino)propyl] trimethylammonium, N-[tris(hydroxymethyl) methyl] (meth)acrylamide, N-phenylacrylamide, alkylacrylamide, methacrylamide polyethylene glycol) amine hydrochloride, and combinations thereof and combinations thereof.

Another aspect of the present invention relates to use of the polymer latex as discussed above or prepared by the method as discussed above for the preparation of an aqueous adhesive composition, preferably a two-component aqueous adhesive composition.

In addition, a further aspect of the present invention relates to an aqueous adhesive composition comprising (i) the polymer latex as discussed above or prepared by the method as discussed above and (ii) a polyisocyanate compound.

The (ii) polyisocyanate compound may comprise toluene diisocyanate, hydrogenated toluene diisocyanate, methylene diphenyl diisocyanate, hydrogenated methylene diphenyl diisocyanate, triphenylmethane triisocyanate, 1,2,4-benzene triisocyanate, polymethylene polyphenyl polyisocyanate, xylene diisocyanate, tetramethyl xylylene diisocyanate, 1,6-hexamethylene diisocyanate, 2,2,4-trimethyl hexamethylene diisocyanate, 2,4,4-trimethyl hexamethylene diisocyanate, isophorone diisocyanate, and 4,4'-methylene-bis(cyclohexyl isocyanate), and combinations thereof.

The aqueous adhesive composition as discussed above may further comprise polyvinyl alcohol, vinyl alcohol-ethylene copolymer, silanol-modified polyvinyl alcohol, cellulose derivative, such as methylcellulose, ethylcellulose, hydroxycellulose and carboxycellulose, chitin, chitosan, starches, polyethylene glycol, polypropylene glycol, polyvinyl ether, gelatin, casein, cyclodextrin, and combinations thereof, preferably polyvinyl alcohol.

The aqueous adhesive composition as discussed above may be a two-component adhesive composition, wherein a first component comprises the polymer latex and optionally polyvinyl alcohol, vinyl alcohol-ethylene copolymer, silanol-modified polyvinyl alcohol, cellulose derivative, such as methylcellulose, ethylcellulose, hydroxycellulose and carboxycellulose, chitin, chitosan, starches, polyethylene glycol, polypropylene glycol, polyvinyl ether, gelatin, casein, cyclodextrin, and combinations thereof, preferably polyvinyl alcohol; and a second component comprises the polyisocyanate compound.

The aqueous adhesive composition as discussed above may comprise from 1 to 50 wt.-%, preferably from 2 to 45 wt.-%, more preferably from 5 to 40 wt.-% of the polyisocyanate compound (ii), based on the total solids content of the aqueous adhesive composition.

The aqueous adhesive as discussed above may be in the form of a wood glue. Another aspect of the present invention relates to a method of preparing an aqueous adhesive composition comprising:
providing (i) the polymer latex as discussed above or prepared by the method as discussed above; and mixing with a (ii) polyisocyanate compound, wherein the aqueous adhesive composition preferably is a wood glue.

### Detailed description of the invention:

The present invention relates to a polymer latex for use in an adhesive composition. The polymer latex is obtainable by free-radical emulsion polymerization of a mixture of ethylenically unsaturated monomers comprising: (a) a vinyl aromatic monomer; (b) a conjugated diene monomer; and (c) an ethylenically unsaturated monomer having an acid and/or a hydroxyl functional group. According to the present invention, the weight ratio of the vinyl aromatic monomer (a) to the conjugated diene monomer (b) is in the range of from 1.60 to 2.30. The polymer latex of the present invention has a median particle size of at least 220 nm. The median particle size is determined by dynamic light scattering according to ISO 22412:2017, e.g., with the dynamic light scattering instrument Mastersizer 2000 (Malvern Panalytical (United Kingdom)). The polymer latex preferably is obtained by free-radical emulsion polymerization of a mixture of ethylenically unsaturated monomers comprising: (a) a vinyl aromatic monomer; (b) a conjugated diene monomer; and (c) an ethylenically unsaturated monomer having an acid and/or a hydroxyl functional group.

It has surprisingly been found, that the weight ratio of the vinyl aromatic monomer (a) to the conjugated diene monomer (b) as well as the median particle size of the polymer latex of the present invention provide for improved wood joint strength as well as improved pot life.

According to the present invention, the sum of the vinyl aromatic monomer (a) and the conjugated diene monomer (b) may be at least 85.0 wt.-%, such as at least 87.0 wt.-%, or at least 90.0 wt.-%, or at least 93.0 wt.-%, or at least 95.0 wt.-%, or at least 97.0 wt.-%, based on the total weight of the monomers in the monomer mixture. The sum of the vinyl aromatic monomer (a) and the conjugated diene monomer (b) may be 99.0 wt.-% or less, such as 98.5 wt.-% or less, or 98.0 wt.-% or less, or 97.5 wt.-% or less, based on the total weight of the monomers in the monomer mixture. A person skilled in the art will appreciate that any range between any of the explicitly disclosed lower and upper limit is herein disclosed. Accordingly, the sum of the vinyl aromatic monomer (a) and the conjugated diene monomer (b) can be in the range of from 85.0 to 99.0 wt.-%, preferably from 90.0 to 98.0 wt.-%, more preferably from 92.0 to 98 wt.-%, even more preferably from 95.0 to 98.0 wt.-%, most preferably from 95.0 to 98.0 wt.-%, based on the total weight of the monomers in the monomer mixture.

The mixture of the ethylenically unsaturated monomers of the present invention may comprise (a) at least 40 wt.-%, such as at least 43 wt.-%, or at least 45 wt.-%, or at least 47 wt.-%, or at least 50 wt.-%, or at least 53 wt.-%, or at least 55 wt.-%, or at least 57 wt.-%, or at least 60 wt.-% of the vinyl aromatic monomer, based on the total weight of the monomers in the monomer mixture. The mixture of the ethylenically unsaturated monomers of the present invention may comprise (a) 80 wt.-% or less, such as 78 wt.-% or less, or 75 wt.-% or less, or 70 wt.-% or less, or 68 wt.-% or less of the vinyl aromatic monomer, based on the total weight of the monomers in the monomer mixture. A person skilled in the art will appreciate that any range between any of the explicitly disclosed lower and upper limit is herein disclosed. Accordingly, the mixture of ethylenically unsaturated monomers may comprise (a) 40 to 80 wt.-%, preferably 50 to 75 wt.-%, more preferably 55 to 70 wt.-%, most preferably 60 to 70 wt.-% of the vinyl aromatic monomer, based on the total weight of the monomers in the monomer mixture.

According to the present invention, the vinyl aromatic monomer (a) may be selected from styrene, alpha-methyl styrene, vinyl toluene and combinations thereof. Preferably the vinyl aromatic monomer (a) may be styrene.

The mixture of the ethylenically unsaturated monomers of the present invention may comprise (b) at least 15 wt.-%, such as at least 17 wt.-%, or at least 20 wt.-%, or at least 22 wt.-%, or at least 25 wt.-%, or at least 27 wt.-%, or at least 30 wt.-% of the conjugated diene monomer, based on the total weight of the monomers in the monomer mixture. The mixture of the ethylenically unsaturated monomers of the present invention may comprise (b) 50 wt.-% or less, such as 48 wt.-% or less, or 45 wt.-% or less, or 43 wt.-% or less, or 40 wt.-% or less, or 38 wt.-% or less of the conjugated diene monomer, based on the total weight of the monomers in the monomer mixture. A person skilled in the art will appreciate that any range between any of the explicitly disclosed lower and upper limit is herein disclosed. Accordingly, the mixture of ethylenically unsaturated monomers may comprise (b) 15 to 50 wt.-%, preferably 20 to 45 wt.-%, more preferably 25 to 40 wt.-%, even more preferably 27 to 40 wt.-%, most preferably 27 to 38 wt.-% of the conjugated diene monomer, based on the total weight of the monomers in the monomer mixture.

According to the present invention, the conjugated diene monomer (b) may be selected from 1,3-butadiene, isoprene, 2,3-dimethyl-1,3-butadiene, 2-chloro-1,3-butadiene, 1,3-pentadiene, 1,3-hexadiene, 2,4-hexadiene, 1,3-octadiene, 2-methyl-1,3-pentadiene, 2,3-dimethyl-1,3-pentadiene, 3,4-dimethyl-1,3-hexadiene, 2,3-diethyl-1,3-butadiene, 4,5-diethyl-1,3-octadiene, 3-butyl-1,3-octadiene, 3,7-dimethyl-1,3,6-octatriene, 2-methyl-6-methylene-1,7-octadiene, 7-methyl-3-methylene-1,6-octadiene, 1,3,7-octatriene, 2-ethyl-1,3-butadiene, 2-amyl-1,3-butadiene, 3,7-dimethyl-1,3,7- octatriene, 3,7-dimethyl-1,3,6-octatriene, 3,7,11- trimethyl-1,3,6,10-dodecatetraene, 7,11-dimethyl-3-methylene-1,6,10-dodecatriene, 2,6-dimethyl-2,4,6-octatriene, 2-phenyl-1,3-butadiene, 2-methyl-3-isopropyl-1,3-butadiene, 1,3-cyclohexadiene, myrcene, ocimene, farnesene and combinations thereof, preferably 1,3-butadiene, isoprene and combinations thereof. The conjugated diene monomer (b) may be 1,3-butadiene.

The mixture of the ethylenically unsaturated monomers of the present invention may comprise (c) at least 0.2 wt.-%, such as at least 0.3 wt.-%, or at least 0.4 wt.-%, or at least 0.5 wt.-%, or at least 0.6 wt.-%, or at least 0.7 wt.-%, or at least 0.8 wt.-%, or at least 0.9 wt.-%, or at least 1.0 wt.-% of the ethylenically unsaturated monomer having an acid and/or a hydroxyl functional group, based on the total weight of the monomers in the monomer mixture. The mixture of the ethylenically unsaturated monomers of the present invention may comprise (c) 6.0 wt.-% or less, such as 5.5 wt.-% or less, or 5.0 wt.-% or less, or 4.5 wt.-% or less, or 4.0 wt.-% or less of the ethylenically unsaturated monomer having an acid and/or a hydroxyl functional group, based on the total weight of the monomers in the monomer mixture. A person skilled in the art will appreciate that any range between any of the explicitly disclosed lower and upper limit is herein disclosed. Accordingly, the mixture of ethylenically unsaturated monomers may comprise (c) 0.2 to 6.0 wt.-%, preferably 0.3 to 5.0 wt.-%, more preferably 0.5 to 4.0 wt.-%, even more preferably 0.7 to 4.0 wt.-%, most preferably 1.0 to 4.0 wt.-% of the ethylenically unsaturated monomer having an acid and/or a hydroxyl functional group, based on the total weight of the monomers in the monomer mixture.

The ethylenically unsaturated monomer having an acid functional group (c), which can be used in the present invention, may be selected from ethylenically unsaturated carboxylic acid monomers, ethylenically unsaturated sulfonic acid monomers, ethylenically unsaturated phosphorous-containing acid monomers, and combinations thereof. The ethylenically unsaturated carboxylic acid monomers suitable for use in the present invention may include monocarboxylic acid and dicarboxylic acid monomers, monoesters of dicarboxylic acid, carboxy alkyl esters of ethylenically unsaturated acids such as 2-carboxy ethyl (meth)acrylate, and ethylenically unsaturated carboxylic acid derivatives such as ethylenically unsaturated dicarboxylic acid anhydrides. Carrying out the present invention, it is preferable to use ethylenically unsaturated aliphatic mono- or dicarboxylic acids or anhydrides which contain from 3 to 5 carbon atoms. Examples of monocarboxylic acid monomers include (meth)acrylic acid, crotonic acid and examples of dicarboxylic acid monomers including fumaric acid, itaconic acid, maleic acid and maleic anhydride.

Examples of ethylenically unsaturated sulfonic acid monomers include vinyl sulfonic acid, phenyl vinyl sulfonate, sodium 4-vinylbenzenesulfonate, 2-methyl-2-propene-1-sulfonic acid, 2-propene-1-sulfonic acid, 4-styrenesulfonic acid, 3-allyloxy-2-hydroxy-1-propanesulfonic acid, 2-acrylamido-2-methyl-1-propanesulfonic acid and the salts thereof.

Examples of ethylenically unsaturated phosphorus-containing acid monomers include vinyl phosphonic acid, dimethyl vinyl phosphonate, diethyl vinyl phosphonate, diethyl allyl phosphonate, allyl phosphonic acid and the salts thereof.

Preferably, the ethylenically unsaturated monomer having an acid functional group (c) is selected from ethylenically unsaturated carboxylic acid monomers, ethylenically unsaturated sulfonic acid monomers, ethylenically unsaturated phosphorous-containing acid monomers, and combinations thereof, preferably from (meth)acrylic acid, crotonic acid, fumaric acid, itaconic acid, maleic acid, maleic anhydride, vinyl acetic acid, vinyl lactic acid, vinyl sulfonic acid, styrene sulfonic acid, 2-carboxy ethyl (meth)acrylate, phenyl vinyl sulfonate, sodium 4-vinyl benzenesulfonate, 2-methyl-2-propene-1-sulfonic acid, 2-propene-1-sulfonic acid, 4-styrenesulfonic acid, 2-acrylamido-2-methyl-1-propanesulfonic acid, vinyl phosphonic acid, dimethyl vinyl phosphonate, diethyl vinyl phosphonate, diethyl allylphosphonate, allylphosphonic acid, and combinations thereof. More preferably, the ethylenically unsaturated monomer having an acid functional group (c) is selected from (meth)acrylic acid, itaconic acid, and combinations thereof.

The ethylenically unsaturated monomer having a hydroxyl functional group (c), which can be used in the present invention, may be selected from allyl alcohol, vinyl alcohol, N-methylol (meth)acrylamide, 1-penten-3-ol, hydroxyalkyl esters of ethylenically unsaturated acids and combinations thereof, preferably hydroxyalkyl esters of ethylenically unsaturated acids.

The hydroxyalkyl esters of ethylenically unsaturated acids may include hydroxyalkyl acrylate and methacrylate monomers which are based on ethylene oxide, propylene oxide and higher alkylene oxides or mixtures thereof. Suitable examples of hydroxyalkyl esters of ethylenically unsaturated acids may be selected from hydroxyethyl (meth)acrylate, hydroxypropyl (meth)acrylate, hydroxybutyl (meth)acrylate, hydroxyethylcaprolactone acrylate, and combinations thereof.

The ethylenically unsaturated monomer having an acid and a hydroxyl functional group (c), which can be used in the present invention, may be selected from 3-allyloxy-2-hydroxy-1-propane sulfonic acid.

The ethylenically unsaturated monomer having an acid and/or a hydroxyl functional group (c), which can be used in the present invention, may be selected from (meth)acrylic acid, crotonic acid, fumaric acid, itaconic acid, maleic acid, maleic anhydride, vinyl acetic acid, vinyl lactic acid, vinyl sulfonic acid, styrene sulfonic acid, 2-carboxy ethyl (meth)acrylate, phenyl vinyl sulfonate, sodium 4-vinylbenzenesulfonate, 2-methyl-2-propene-1-sulfonic acid, 2-propene-1-sulfonic acid, 4-styrenesulfonic acid, 2-acrylamido-2-methyl-1-propanesulfonic acid, vinyl phosphonic acid, dimethyl vinyl phosphonate, diethyl vinyl phosphonate, diethyl allyl phosphonate, allyl phosphonic acid, allyl alcohol, vinyl alcohol, N-methylol (meth)acrylamide, 1-penten-3-ol, hydroxyalkyl esters of ethylenically unsaturated acids, such as hydroxyethyl (meth)acrylate, hydroxypropyl (meth)acrylate, hydroxybutyl (meth)acrylate and hydroxyethylcaprolactone acrylate, and 3-allyloxy-2-hydroxy-1-propane sulfonic acid, preferably (meth)acrylic acid, itaconic acid, hydroxyalkyl esters of ethylenically unsaturated acids, such as hydroxyethyl (meth)acrylate, hydroxypropyl (meth)acrylate, hydroxybutyl (meth)acrylate and hydroxyethylcaprolactone acrylate, and combinations thereof, more preferably (meth)acrylic acid, itaconic acid, hydroxyethyl (meth)acrylate, hydroxypropyl (meth)acrylate, hydroxybutyl (meth)acrylate, and combinations thereof.

According to the present invention, the mixture of ethylenically unsaturated monomers may comprise:
(a) 40 to 80 wt.-%, preferably 50 to 75 wt.-%, more preferably 55 to 70 wt.-%, most preferably 60 to 70 wt.-% of the vinyl aromatic monomer;
(b) 15 to 50 wt.-%, preferably 20 to 45 wt.-%, more preferably 25 to 40 wt.-%, even more preferably 27 to 40 wt.-%, most preferably 27 to 38 wt.-% of the conjugated diene monomer; and
(c) 0.2 to 6.0 wt.-%, preferably 0.3 to 5.0 wt.-%, more preferably 0.5 to 4.0 wt.-%, even more preferably 0.7 to 4.0 wt.-%, most preferably 1.0 to 4.0 wt.-% of the ethylenically unsaturated monomer having an acid and/or a hydroxyl functional group, based on the total weight of the monomers in the monomer mixture.

According to the present invention, the mixture of ethylenically unsaturated monomers may comprise:
(a) 40 to 80 wt.-%, preferably 50 to 75 wt.-%, more preferably 55 to 70 wt.-%, most preferably 60 to 70 wt.-% of the vinyl aromatic monomer;
(b) 15 to 50 wt.-%, preferably 20 to 45 wt.-%, more preferably 25 to 40 wt.-%, even more preferably 27 to 40 wt.-%, most preferably 27 to 38 wt.-% of the conjugated diene monomer; and
(c) 0.2 to 6.0 wt.-%, preferably 0.3 to 5.0 wt.-%, more preferably 0.5 to 4.0 wt.-%, even more preferably 0.7 to 4.0 wt.-%, most preferably 1.0 to 4.0 wt.-% of the ethylenically unsaturated monomer having an acid and/or a hydroxyl functional group, based on the total weight of the monomers in the monomer mixture;

wherein the vinyl aromatic monomer (a) is selected from styrene, alpha-methyl styrene, vinyl toluene and combinations thereof, preferably styrene
wherein the conjugated diene monomer (b) is selected from 1,3-butadiene, isoprene, 2,3-dimethyl-1,3-butadiene, 2-chloro-1,3-butadiene, 1,3-pentadiene, 1,3-hexadiene, 2,4-hexadiene, 1,3-octadiene, 2-methyl-1,3-pentadiene, 2,3-dimethyl-1,3-pentadiene, 3,4-dimethyl-1,3-hexadiene, 2,3-diethyl-1,3-butadiene, 4,5-diethyl-1,3-octadiene, 3-butyl-1,3-octadiene, 3,7-dimethyl-1,3,6-octatriene, 2-methyl-6-methylene-1,7-octadiene, 7-methyl-3-methylene-1,6-octadiene, 1,3,7-octatriene, 2-ethyl-1,3-butadiene, 2-amyl-1,3-butadiene, 3,7-dimethyl-1,3,7-octatriene, 3,7-dimethyl-1,3,6-octatriene, 3,7,11- trimethyl-1,3,6,10-dodecatetraene, 7,11-dimethyl-3-methylene-1,6,10-dodecatriene, 2,6-dimethyl-2,4,6-octatriene, 2-phenyl-1,3-butadiene, 2-methyl-3-isopropyl-1,3-butadiene, 1,3-cyclohexadiene, myrcene, ocimene, farnesene and combinations thereof, preferably 1,3-butadiene, isoprene and combinations thereof, more preferably 1,3-butadiene,
wherein the ethylenically unsaturated monomer having an acid and/or a hydroxyl functional group (c) is selected from (meth)acrylic acid, crotonic acid, fumaric acid, itaconic acid, maleic acid, maleic anhydride, vinyl acetic acid, vinyl lactic acid, vinyl sulfonic acid, styrene sulfonic acid, 2-carboxy ethyl (meth)acrylate, phenyl vinyl sulfonate, sodium 4-vinylbenzenesulfonate, 2-methyl-2-propene-1-sulfonic acid, 2-propene-1-sulfonic acid, 4-styrenesulfonic acid, 2-acrylamido-2-methyl-1-propanesulfonic acid, vinyl phosphonic acid, dimethyl vinyl phosphonate, diethyl vinyl phosphonate, diethyl allyl phosphonate, allyl phosphonic acid, allyl alcohol, vinyl alcohol, N-methylol (meth)acrylamide, 1-penten-3-ol, hydroxyalkyl esters of ethylenically unsaturated acids, such as hydroxyethyl (meth)acrylate, hydroxypropyl (meth)acrylate, hydroxybutyl (meth)acrylate and hydroxyethylcaprolactone acrylate, and 3-allyloxy-2-hydroxy-1-propane sulfonic acid, preferably (meth)acrylic acid, itaconic acid, hydroxyalkyl esters of ethylenically unsaturated acids, such as hydroxyethyl (meth)acrylate, hydroxypropyl (meth)acrylate, hydroxybutyl (meth)acrylate and hydroxyethylcaprolactone acrylate, and combinations thereof, more preferably (meth)acrylic acid, itaconic acid, hydroxyethyl (meth)acrylate, hydroxypropyl (meth)acrylate, hydroxybutyl (meth)acrylate, and combinations thereof.

According to the present invention, the weight ratio of the vinyl aromatic monomer (a) to the conjugated diene monomer (b) is at least 1.60, such as at least 1.62, or at least 1.65, or at least 1.67, or at least 1.70. The weight ratio of the vinyl aromatic monomer (a) to the conjugated diene monomer (b) is no more than 2.30, such as no more than 2.25, or no more than 2.20, or no more than 2.15, or no more than 2.10. A person skilled in the art will appreciate that any range between any of the explicitly disclosed lower and upper limit is herein disclosed. Accordingly, the weight ratio of the vinyl aromatic monomer (a) to the conjugated diene monomer (b) may be in the range of from 1.62 to 2.25, preferably 1.65 to 2.20, more preferably 1.70 to 2.15, most preferably 1.70 to 2.10.

According to the present invention, the polymer latex has a median particle size of at least 220 nm, preferably at least 230 nm, more preferably of at least 250 nm. The polymer latex may have a median particle size of no more than 400 nm, such as no more than 350 nm, or no more than 300 nm. A person skilled in the art will appreciate that any range between any of the explicitly disclosed lower and upper limit is herein disclosed. Accordingly, the polymer latex may have a median particle size in a range of 220 nm to 400 nm, preferably 230 nm to 400 nm, more preferably 250 nm to 400 nm. The median particle size is determined by dynamic light scattering according to ISO 22412:2017, e.g., with the dynamic light scattering instrument Mastersizer 2000 (Malvern Panalytical (UK)).

The mixture of ethylenically unsaturated monomers may comprise a chain transfer agent. According to the present invention, the mixture of the ethylenically unsaturated monomers may comprise at least 0.05 wt.-%, such as at least 0.07 wt.-%, or at least 0.10 wt.-%, or at least 0.12 wt.-%, or at least 0.15 wt.-% of a chain transfer agent, wherein the weight percentage is based on the total amount of monomers in the monomer mixture. The mixture of the ethylenically unsaturated monomers may comprise 3.0 wt.-% or less, such as 2.5 wt.-% or less, or 2.0 wt.-% or less, or 1.5 wt.-% or less of a chain transfer agent, wherein the weight percentage is based on the total amount of monomers in the monomer mixture. A person skilled in the art will appreciate that any range between any of the explicitly disclosed lower and upper limit is herein disclosed. Accordingly, the mixture of the ethylenically unsaturated monomers may comprise from 0.05 to 3.0 wt.-%, preferably 0.10 to 2.0 wt.-%, more preferably 0.15 to 1.5 wt.-% of a chain transfer agent, wherein the weight percentage is based on the total amount of monomers in the monomer mixture.

The chain transfer agent may be selected from n-dodecyl mercaptan, carbon tetrachloride, carbon tetrabromide, bromotrichloro methane, 4-methylbenzenethiol, isooctyl 3-mercaptopropionate, tert-nonyl mercaptan, 4,4'-thiobisbenzenethiol, tert-dodecyl mercaptan, alpha-methyl styrene dimer, thioglycolic acid, 2-ethylhexyl thioglycolate, butyl 3-mercaptopropionate, 1,8-dimercapto-3,6-dioxa octane and combinations thereof, more preferably tert-dodecyl mercaptan.

The mixture of the ethylenically unsaturated monomers may further comprise (d) an ethylenically unsaturated monomer different from (a) to (c). According to the present invention, the mixture of ethylenically unsaturated monomers may further comprise (d) 0 to 20 wt.-%, preferably 0 to 15 wt.-%, more preferably 0 to 10 wt.-% of an ethylenically unsaturated monomer different from (a) to (c), based on the total weight of the monomers in the monomer mixture. The ethylenically unsaturated monomer different from (a) to (c) may be selected from (d1) an ethylenically unsaturated nitrile compound, (d2) an alkyl ester of ethylenically unsaturated acid, (d3) an ethylenically unsaturated compound bearing a primary or secondary amino group, and combinations thereof.

The ethylenically unsaturated nitrile compound (d1) may be selected from (meth)acrylonitrile, alpha-cyanoethyl acrylonitrile, fumaronitrile, alpha-chloronitrile and combinations thereof.

The alkyl ester of ethylenically unsaturated acid (d2) may be selected from methyl (meth)acrylate, ethyl (meth)acrylate, propyl (meth)acrylate, butyl (meth)acrylate, 2-ethylhexyl (meth)acrylate, and combinations thereof, preferably methyl (meth)acrylate and combinations thereof.

The ethylenically unsaturated compound bearing a primary or secondary amino group (d3) may be selected from (meth)acrylamide, 2-amino ethyl (meth)acrylate hydrochloride, 2-amino ethyl (meth)acrylamide hydrochloride, N-ethyl (meth)acrylamide, N-(3-amino propyl) (meth)acrylamide hydrochloride, N-hydroxyethyl (meth)acrylamide, N-3-(dimethylamino) propyl (meth)acrylamide, [3-(methacryloylamino)propyl] trimethylammonium, N-[tris(hydroxymethyl) methyl] (meth)acrylamide, N-phenylacrylamide, alkylacrylamide, methacrylamide polyethylene glycol) amine hydrochloride, and combinations thereof.

According to the present invention, the amounts of the above-defined monomers for the preparation of polymer latex may add up to 100 wt.-%, based on the total amount of monomers in the monomer mixture.

### Method for preparing polymer latex

The present invention relates to a method for preparing a polymer latex for the use in adhesives, which comprises polymerizing by free-radical emulsion polymerization of a mixture of ethylenically unsaturated monomers. The mixture of ethylenically unsaturated monomers comprises (a) a vinyl aromatic monomer; (b) a conjugated diene monomer; and (c) an ethylenically unsaturated monomer having an acid and/or a hydroxyl functional group. According to the present invention, the weight ratio of the vinyl aromatic monomer (a) to the conjugated diene monomer (b) is in the range of from 1.60 to 2.30. The polymer latex of the present invention has a median particle size of at least 220 nm. The median particle size is determined by dynamic light scattering according to ISO 22412:2017, e.g., with the dynamic light scattering instrument Mastersizer 2000 (Malvern Panalytical (United Kingdom)).

According to the present invention, the sum of the vinyl aromatic monomer (a) and the conjugated diene monomer (b) may be at least 85.0 wt.-%, such as at least 87.0 wt.-%, or at least 90.0 wt.-%, or at least 93.0 wt.-%, or at least 95.0 wt.-%, or at least 97.0 wt.-%, based on the total weight of the monomers in the monomer mixture. The sum of the vinyl aromatic monomer (a) and the conjugated diene monomer (b) may be 99.0 wt.-% or less, such as 98.5 wt.-% or less, or 98.0 wt.-% or less, or 97.5 wt.-% or less, based on the total weight of the monomers in the monomer mixture. A person skilled in the art will appreciate that any range between any of the explicitly disclosed lower and upper limit is herein disclosed. Accordingly, the sum of the vinyl aromatic monomer (a) and the conjugated diene monomer (b) can be in the range of from 85.0 to 99.0 w.-%, preferably from 90.0 to 98.0 wt.-%, more preferably from 92.0 to 98.0 wt.-%, even more preferably from 95.0 to 98.0 wt.-%, most preferably from 95.0 to 98.0 wt.-%, based on the total weight of the monomers in the monomer mixture.

All variations with respect to the compounds used for the preparation of the polymer latex of the present invention and their relative amounts can be as described above.

According to the present invention, the weight ratio of the vinyl aromatic monomer (a) to the conjugated diene monomer (b) is at least 1.60, such as at least 1.62, or at least 1.65, or at least 1.67, or at least 1.70. The weight ratio of the vinyl aromatic monomer (a) to the conjugated diene monomer (b) is no more than 2.30, such as no more than 2.25, or no more than 2.20, or no more than 2.15, or no more than 2.10. A person skilled in the art will appreciate that any range between any of the explicitly disclosed lower and upper limit is herein disclosed. Accordingly, the weight ratio of the vinyl aromatic monomer (a) to the conjugated diene monomer (b) may be in the range of from 1.62 to 2.25, preferably 1.65 to 2.20, more preferably 1.70 to 2.15, most preferably 1.70 to 2.10.

According to the present invention, the polymer latex has a median particle size of at least 220 nm, preferably at least 230 nm, more preferably of at least 250 nm. The polymer latex may have a median particle size of no more than 400 nm, such as no more than 350 nm, or no more than 300 nm. A person skilled in the art will appreciate that any range between any of the explicitly disclosed lower and upper limit is herein disclosed. Accordingly, the polymer latex may have a median particle size in a range of 220 nm to 400 nm, preferably 230 nm to 400 nm, more preferably 250 nm to 400 nm. The median particle size is determined by dynamic light scattering according to ISO 22412:2017, e.g., with the dynamic light scattering instrument Mastersizer 2000 (Malvern Panalytical (UK)).

The mixture of ethylenically unsaturated monomers may comprise a chain transfer agent. According to the present invention, the mixture of ethylenically unsaturated monomers may comprise at least 0.05 wt.-%, such as at least 0.07 wt.-%, or at least 0.10 wt.-%, or at least 0.12 wt.-%, or at least 0.15 wt.-% of a chain transfer agent, wherein the weight percentage is based on the total amount of monomers in the monomer mixture. The mixture of ethylenically unsaturated monomers may comprise 3.0 wt.-% or less, such as 2.5 wt.-% or less, or 2.0 wt.-% or less, or 1.5 wt.-% or less of a chain transfer agent, wherein the weight percentage is based on the total amount of monomers in the monomer mixture. A person skilled in the art will appreciate that any range between any of the explicitly disclosed lower and upper limit is herein disclosed. Accordingly, the mixture of ethylenically unsaturated monomers 0.05 to 3.0 wt.-%, preferably 0.10 to 2.0 wt.-%, more preferably 0.15 to 1.5 wt.-% of a chain transfer agent, wherein the weight percentage is based on the total amount of monomers in the monomer mixture.

The chain transfer agent may be selected from n-dodecyl mercaptan, carbon tetrachloride, carbon tetrabromide, bromotrichloro methane, 4-methylbenzenethiol, isooctyl 3-mercaptopropionate, tert-nonyl mercaptan, 4,4'-thiobisbenzenethiol, tert-dodecyl mercaptan, alpha-methyl styrene dimer, thioglycolic acid, 2-ethylhexyl thioglycolate, butyl 3-mercaptopropionate, 1,8-dimercapto-3,6-dioxa octane and combinations thereof, more preferably tert-dodecyl mercaptan.

The mixture of ethylenically unsaturated monomers may further comprise (d) an ethylenically unsaturated monomer different from (a) to (c). According to the present invention, the mixture of ethylenically unsaturated monomers may further comprise (d) 0 to 20 wt.-%, preferably 0 to 15 wt.-%, more preferably 0 to 10 wt.-% of an ethylenically unsaturated monomer different from (a) to (c), based on the total weight of the monomers in the monomer mixture. The ethylenically unsaturated monomer different from (a) to (c) may be selected from (d1) an ethylenically unsaturated nitrile compound, (d2) an alkyl ester of ethylenically unsaturated acid, (d3) an ethylenically unsaturated compound bearing a primary or secondary amino group, and combinations thereof.

The ethylenically unsaturated nitrile compound (d1) may be selected from (meth)acrylonitrile, alpha-cyanoethyl acrylonitrile, fumaronitrile, alpha-chloronitrile and combinations thereof.

The alkyl ester of ethylenically unsaturated acid (d2) may be selected from methyl (meth)acrylate, ethyl (meth)acrylate, propyl (meth)acrylate, butyl (meth)acrylate, 2-ethylhexyl (meth)acrylate, and combinations thereof, preferably methyl (meth)acrylate and combinations thereof.

The ethylenically unsaturated compound bearing a primary or secondary amino group (d3) may be selected from (meth)acrylamide, 2-amino ethyl (meth)acrylate hydrochloride, 2-amino ethyl (meth)acrylamide hydrochloride, N-ethyl (meth)acrylamide, N-(3-amino propyl) (meth)acrylamide hydrochloride, N-hydroxyethyl (meth)acrylamide, N-3-(dimethylamino) propyl (meth)acrylamide, [3-(methacryloylamino)propyl] trimethylammonium, N-[tris(hydroxymethyl) methyl] (meth)acrylamide, N-phenylacrylamide, alkylacrylamide, methacrylamide polyethylene glycol) amine hydrochloride, and combinations thereof.

According to the present invention, the amounts of the above-defined monomers for the preparation of the polymer latex may add up to 100 wt.-%, based on the total amount of monomers in the monomer mixture.

The polymer latex of to the present invention can be made by any emulsion polymerization process known to a person skilled in the art, provided that the monomer mixture as herein defined is employed.

In the emulsion polymerization for preparing the polymer latex of the present invention, a seed dispersion may be employed. Any seed particles as known to the person skilled in the art can be used.

The seed particles are preferably present in an amount of 0.01 to 10 parts by weight, preferably 0.1 to 5 parts by weight, based on 100 parts by weight of total ethylenically unsaturated monomers employed in the polymer. The lower limit of the amount of seed particles therefore can be 0.01, 0.05, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, or 2.5 parts by weight. The upper limit of the amount can be 10, 9, 8, 7, 6, 5.5, 5, 4.5, 4, 3.8, 3.6, 3.4, 3.3, 3.2, 3.1 or 3 parts by weight. A person skilled in the art will understand that any range formed by any of the explicitly disclosed lower limits and upper limits is explicitly encompassed in the present specification.

The process for the preparation of the above-described polymer latex can be performed at temperatures of from 0 to 130 °C, preferably of from 0 to 100 °C, particularly preferably of from 20 to 95 °C, very particularly preferably of from 40 to 90 °C, in the presence of no or one or more emulsifiers, no or one or more protective colloids and one or more initiators. The temperature includes all values and sub-values therebetween, especially including 5, 10, 15, 20, 25, 30, 35, 40, 45, 50, 55, 60, 65, 70, 75, 80, 85, 90, 95, 100, 105, 110, 115, 120 and 125 °C.

Initiators which can be used when carrying out the present invention may include water-soluble and/or oil-soluble initiators which are effective for the purposes of the polymerization. Representative initiators are well known in the technical area and include, for example: azo compounds (such as, for example, AIBN, AMBN and cyanovaleric acid) and inorganic peroxy compounds, such as hydrogen peroxide, sodium, potassium and ammonium peroxydisulfate, peroxycarbonates and peroxyborates, as well as organic peroxy compounds, such as alkyl hydroperoxides, dialkyl peroxides, acyl hydroperoxides, and diacyl peroxides, as well as esters, such as tert-butyl perbenzoate and combinations of inorganic and organic initiators. Suitable initiators may be selected from 2,3-dimethyl-2,3-diphenylbutane, tert-butyl hydroperoxide, tert-amyl hydroperoxide, cumyl hydroperoxide, 1,1,3,3-tetramethylbutyl hydroperoxide, isopropylcumyl hydroperoxide, p-menthane hydroperoxide, 2,5-di(tert-butylperoxy)-2,5-dimethyl-3-hexyne, 3,6,9-triethyl-3,6,9-trimethyl-1,4,7-triperoxonane, di(tert-butyl)peroxide, 2,5-dimethyl-2,5-di(tert-butylperoxy)hexane, di(tert-butylperoxyisopropyl)benzene, tert-butyl cumyl peroxide, di-(tert-amyl)-peroxide, dicumyl peroxide, butyl 4,4-di(tert-butylperoxy)valerate, tert-butylperoxybenzoate, 2,2-di(tert-butylperoxy)butane, tert-amyl peroxy-benzoate, tert-butylperoxy-acetate, tert-butylperoxy-(2-ethylhexyl)carbonate, tert-butylperoxy isopropyl carbonate, tert-butyl peroxy-3,5,5-trimethyl-hexanoate, 1,1-di(tert-butylperoxy)cyclohexane, tert-amyl peroxyacetate, tert-amylperoxy-(2-ethylhexyl)carbonate, 1,1-di(tert-butylperoxy)-3,5,5-trimethylcyclohexane, 1,1-di(tert-amylperoxy)cyclohexane, tert-butyl-monoperoxy-maleate, 1,1'-azodi(hexahydrobenzonitrile), tert-butyl peroxy-isobutyrate, tert-butyl peroxydiethylacetate, tert-butyl peroxy-2-ethylhexanoate, dibenzoyl peroxide, tert-amyl peroxy-2-ethylhexanoate, di(4-methylbenzoyl)peroxide, 1,1,3,3-tetramethylbutyl peroxy-2-ethylhexanoate, ammonium peroxodisulfate, 2,5-dimethyl-2,5-di(2-ethylhexanoylperoxy)hexane, 2,2'-azodi(2-methylbutyronitrile), 2,2'-azodi(isobutyronitrile), didecanoyl peroxide, potassium persulfate, dilauroyl peroxide, di(3,5,5-trimethylhexanoyl) peroxide, tert-amyl peroxypivalate, tert-butyl peroxyneoheptanoate, 1,1,3,3-tetramethylbutyl peroxypivalate, tert-butyl peroxypivalate, dicetyl peroxydicarbonate, dimyristyl peroxydicarbonate, di(2-ethylhexyl) peroxydicarbonate, di(4-tert-butylcyclohexyl) peroxydicarbonate, diisopropyl peroxydicarbonate, tert-butyl peroxyneodecanoate, di-sec-butyl peroxydicarbonate, tert-amyl peroxyneodecanoate, cumyl peroxyneoheptanoate, di(3-methoxybutyl) peroxydicarbonate, 1,1,3,3-tetramethylbutyl peroxyneodecanoate, cumyl peroxyneodecanoate, diisobutyryl peroxide, and mixture thereof.

The initiator may be used in a sufficient amount to initiate the polymerization reaction at a desired rate. In general, an amount of initiator of from 0.01 to 5 wt.-%, preferably of from 0.1 to 4 wt.-%, based on the total weight of monomers in the monomer mixture, is sufficient. The amount of initiator is most preferably of from 0.01 to 2 wt.-%, based on the total weight of monomers in the monomer mixture. The amount of initiator includes all values and sub-values therebetween, especially including 0.01, 0.1, 0.5, 1, 1.5, 2, 2.5, 3, 4 and 4.5 wt.-%, based on the total weight of monomers in the monomer mixture.

The above-mentioned inorganic and organic peroxy compounds may also be used alone or in combination with one or more suitable reducing agents, as is well known in the art. Examples of such reducing agents may include sulfur dioxide, alkali metal disulfites, alkali metal and ammonium hydrogen sulfites, thiosulfates, dithionites and formaldehyde sulfoxylates, as well as hydroxylamine hydrochloride, hydrazine sulfate, iron (II) sulfate, cuprous naphthanate, glucose, sulfonic acid compounds such as sodium methane sulfonate, amine compounds such as dimethylaniline and ascorbic acid. The quantity of the reducing agent is preferably 0.03 to 10 parts by weight per part by weight of the polymerization initiator.

Surfactants or emulsifiers which are suitable for stabilizing the dispersion polymer may include those conventional surface-active agents for polymerization processes. The surfactant or surfactants can be added to the aqueous phase and/or the monomer phase. An effective amount of surfactant in a seed process is the amount which was chosen for supporting the stabilization of the particle as a colloid, the minimization of contact between the particles and the prevention of coagulation. In a non-seeded process, an effective amount of surfactant is the amount which was chosen for determining the particle size.

Representative surfactants include saturated and ethylenically unsaturated sulfonic acids or salts thereof, including, for example, unsaturated hydrocarbonsulfonic acid, such as vinylsulfonic acid, allylsulfonic acid and methallylsulfonic acid, and salts thereof; aromatic hydrocarbon acids, such as, for example, p-styrenesulfonic acid, isopropenylbenzenesulfonic acid and vinyloxybenzenesulfonic acid and salts thereof; sulfoalkyl esters of acrylic acid and methacrylic acid, such as, for example, sulfoethyl methacrylate and sulfopropyl methacrylate and salts thereof, and 2-acrylamido-2-methylpropanesulfonic acid and salts thereof; alkylated diphenyl oxide disulfonates, sodium dodecylbenzenesulfonates and dihexyl or dioctyl esters of sodium sulfosuccinate, sodium alkyl esters of sulfonic acid, ethoxylated alkylphenols and ethoxylated alcohols; fatty alcohol sulfates and fatty alcohol (poly)ether sulfates.

The type and the amount of the surfactant is governed typically by the number of particles, their size and their composition. Typically, the surfactant is used in amounts of from 0 to 20 wt.-%, preferably from 0 to 10 wt.-%, more preferably from 0 to 5 wt.-%, based on the total weight of the monomers in the monomer mixture. The amount of surfactant includes all values and sub-values therebetween, especially including 0, 0.1, 0.5, 1, 2, 3, 4, 5, 6, 7, 8, 9, 10, 11, 12, 13, 14, 15, 16, 17, 18 and 19 wt.-%, based on the total weight of the monomer in the monomer composition. The polymerization may be conducted without using surfactants.

The polymer latex of the present invention may further comprise protective colloids. The protective colloids may comprise polyvinyl alcohol, vinyl alcohol-ethylene copolymer, silanol-modified polyvinyl alcohol, cellulose derivative, such as methylcellulose, ethylcellulose, hydroxycellulose and carboxycellulose, chitin, chitosan, starches, polyethylene glycol, polypropylene glycol, polyvinyl ether, gelatin, casein, cyclodextrin, and combinations thereof. The protective colloids may stabilize the polymer latex in addition or instead of the surfactants as described above. The protective colloids may be present during the polymerization or post-added. Typical quantities are 1 to 15 parts by weight, based on 100 parts by weight of the polymer latex.

### Aqueous adhesive composition

The present invention relates to the use of the polymer latex of the present invention as described above or prepared by the method of the present invention as described above for the preparation of an aqueous adhesive composition.

Preferably, the aqueous adhesive composition of the present invention is a two-component composition.

As used herein, a "two-component" or "2K" composition is a composition in which at least a portion of the reactive components readily react and at least partially cure without activation from an external energy source, such as at ambient temperatures, e.g., temperatures in the range of from 20 to 25 °C, or slightly elevated temperatures, e.g., temperatures in the range of 25 ° to 60 °C, when mixed. One of skill in the art understands that the two components of the composition are stored separately from each other and mixed just prior to application of the composition.

As used herein, the term "aqueous" refers to a medium that either consists exclusively of water or comprises predominantly water (e.g., at least 50 wt.-% water) in combination with a non-aqueous solvent. Non-aqueous solvents may be employed in the aqueous adhesive composition of the invention in small amount if desired. The amount of non-aqueous solvents may be 3 wt.-% or less, preferably 2 wt.-% or less, more preferably 1.5 wt.-% or less, most preferably 1 wt.-% or less, and in particular 0.5 wt. or less based on the solids content of the aqueous adhesive composition. Examples of suitable non-aqueous solvents include, but are not limited to, toluene, acetone, methylethylketone, cyclohexane, ethylene glycol dimethyl ether, ethylene glycol diethyl ether, ethylene glycol methyl ether, diethylene glycol dimethyl ether, diethylene glycol diethyl ether, diethylene glycol methyl ether, dimethylformamide, dimethyl sulfoxide, monohydric alcohols such as methanol and ethanol, and polyhydric alcohols. The aqueous adhesive composition is preferably free of non-aqueous solvents.

Furthermore, the present invention relates to an aqueous adhesive composition comprising (i) the polymer latex of the present invention as described above or prepared by the method of the present invention as described above and (ii) a polyisocyanate compound.

All variations with respect to the polymer latex and to the compounds used for the preparation of the polymer latex of the present invention and their relative amounts can be as described above.

According to the present invention, the aqueous adhesive composition may comprise at least 15 wt.-%, such as at least 17 wt.-%, or at least 20 wt.-%, or at least 23 wt.-% of the polymer latex (i), based on the total solids content of the aqueous adhesive composition. The aqueous adhesive composition may comprise up to 50 wt.-%, such as up to 48 wt.-%, or up to 45 wt.-%, or up to 43 wt.-%, or up to 40 wt.-% of the polymer latex (i), based on the total solids content of the aqueous adhesive composition. A person skilled in the art will appreciate that any range between any of the explicitly disclosed lower and upper limit is herein disclosed. Accordingly, the aqueous adhesive composition may comprise from 15 to 50 wt.-%, preferably from 17 to 45 wt.-%, more preferably from 20 to 40 wt.-% of the polymer latex (i), based on the total solids content of the aqueous adhesive composition.

As used herein, the term "polyisocyanate" refers to a compound having more than one isocyanate group per molecule, e.g., 2, 3, 4, 5, 6, or more isocyanate groups per molecule. Suitable polyisocyanates can be aliphatic, aromatic, or a mixture thereof. The polyisocyanate may comprise toluene diisocyanate, hydrogenated toluene diisocyanate, methylene diphenyl diisocyanate, hydrogenated methylene diphenyl diisocyanate, triphenylmethane triisocyanate, 1,2,4-benzene triisocyanate, polymethylene polyphenyl polyisocyanate, xylene diisocyanate, tetramethyl xylylene diisocyanate, 1,6-hexamethylene diisocyanate, 2,2,4-trimethyl hexamethylene diisocyanate, 2,4,4-trimethyl hexamethylene diisocyanate, isophorone diisocyanate, and 4,4'-methylene-bis(cyclohexyl isocyanate). Suitable polyisocyanates that can be used according to the present invention can be exemplified by Bayhydur and Desmodur grade polyisocyanates commercially available from Covestro (Germany), and by Suprasec grade polyisocyanates commercially available from Huntsman Corporation (USA).

The aqueous adhesive composition may comprise at least 1 wt.-%, such as at least 2 wt.-%, or at least 5 wt.-%, or at least 7 wt.-% of the polyisocyanate compound (ii), based on the total solids content of the aqueous adhesive composition. The aqueous adhesive composition may comprise up to 50 wt.-%, such as up to 48 wt.-%, or up to 45 wt.-%, or up to 43 wt.-%, or up to 40 wt.-% of the polyisocyanate compound (ii), based on the total solids content of the aqueous adhesive composition. A person skilled in the art will appreciate that any range between any of the explicitly disclosed lower and upper limit is herein disclosed. Accordingly, aqueous adhesive composition may comprise from 1 to 50 wt.-%, preferably from 2 to 45 wt.-%, more preferably from 5 to 40 wt.-% of the polyisocyanate compound (ii), based on the total solids content of the aqueous adhesive composition.

The aqueous adhesive composition of the present invention may further comprise polyvinyl alcohol, vinyl alcohol-ethylene copolymer, silanol-modified polyvinyl alcohol, cellulose derivative, such as methylcellulose, ethylcellulose, hydroxycellulose and carboxycellulose, chitin, chitosan, starches, polyethylene glycol, polypropylene glycol, polyvinyl ether, gelatin, casein, cyclodextrin, and combinations thereof. Preferably, the aqueous adhesive composition of the present invention further comprises polyvinyl alcohol. As used herein, the term "polyvinyl alcohol" is generally acknowledged in the art as a completely or partially hydrolyzed polyvinyl acetate. The polyvinyl alcohol may have a saponification degree of up to 99 %. As used herein, the term "saponification degree" refers to the ratio of a hydroxyl group with respect to the total number of the hydroxyl group and a carbonyloxy group such as an acetyloxy group in the polyvinyl alcohol. The saponification degree has to be understood as an average value meaning that mixtures of less hydrolyzed and more hydrolyzed polyvinyl alcohols can be used. Preferably, a saponification degree in the range of from 70 to 99 %, more preferably from 80 to 97 % is used. Suitable examples of polyvinyl alcohols include, but are not limited to, Poval grade polyvinyl alcohols commercially available from Kuraray (Japan).

According to the present invention, the polyvinyl alcohol, vinyl alcohol-ethylene copolymer, silanol-modified polyvinyl alcohol, cellulose derivative, such as methylcellulose, ethylcellulose, hydroxycellulose and carboxycellulose, chitin, chitosan, starches, polyethylene glycol, polypropylene glycol, polyvinyl ether, gelatin, casein, cyclodextrin, and combinations thereof may be used in an amount of at least 3 wt.-%, such as at least 5 wt.-%, or at least 7 wt.-%, or at least 9 wt.- %, based on the total solids content of the aqueous adhesive composition. The polyvinyl alcohol, vinyl alcohol-ethylene copolymer, silanol-modified polyvinyl alcohol, cellulose derivative, such as methylcellulose, ethylcellulose, hydroxycellulose and carboxycellulose, chitin, chitosan, starches, polyethylene glycol, polypropylene glycol, polyvinyl ether, gelatin, casein, cyclodextrin, and combinations thereof may be used in an amount of up to 60 wt.-%, such as up to 50 wt.-%, or up to 45 wt.-%, or up to 40 wt.-%, based on the total solids content of the aqueous adhesive composition . A person skilled in the art will appreciate that any range between any of the explicitly disclosed lower and upper limit is herein disclosed. Accordingly, the polyvinyl alcohol, vinyl alcohol-ethylene copolymer, silanol-modified polyvinyl alcohol, cellulose derivative, such as methylcellulose, ethylcellulose, hydroxycellulose and carboxycellulose, chitin, chitosan, starches, polyethylene glycol, polypropylene glycol, polyvinyl ether, gelatin, casein, cyclodextrin, and combinations thereof may be used in an amount of from 3 to 60 wt.-%, preferably from 5 to 50 wt.-%, more preferably 7 to 40 wt.-%, based on the total solids content of the aqueous adhesive composition.

The aqueous adhesive composition may comprise at least 3 wt.-%, such as at least 5 wt.-%, or at least 7 wt.-% of polyvinyl alcohol, based on the total solids content of the aqueous adhesive composition. The aqueous adhesive composition may comprise up to 60 wt.-%, such as up to 50 wt.-%, or up to 45 wt.-%, or up to 40 wt.-% of polyvinyl alcohol, based on the total solids content of the aqueous adhesive composition. A person skilled in the art will appreciate that any range between any of the explicitly disclosed lower and upper limit is herein disclosed. Accordingly, the aqueous adhesive composition may comprise from 3 to 60 wt.-%, preferably 5 to 50 wt.-%, more preferably 7 to 40 wt.-%, of polyvinyl alcohol, based on the total solids content of the aqueous adhesive composition.

Optionally, the aqueous adhesive composition may further comprise a polymer latex different to those of the present invention, such as polyvinyl acetate, vinyl acetate-ethylene copolymer, polyurethane, acrylonitrile-butadiene copolymer, and combinations thereof, preferably polyvinyl acetate, vinyl acetate-ethylene copolymer, and combinations thereof. The aqueous adhesive composition may comprise up to 40 wt.-%, such as up to 30 wt.-%, or up to 20 wt.-%, or up to 10 wt.-%, or up to 5 wt.-% of the polymer latex different to those of the present invention, preferably polyvinyl acetate, vinyl acetate-ethylene copolymer, the weight percentages being based on the total solids content of the aqueous adhesive composition.

The aqueous adhesive composition may further comprise additives, such as plasticizers, antifoaming agents, thickeners, leveling agents, dispersants, colorants, water resistant additives, lubricants, pH adjusters, biocides, antioxidants, inorganic pigments, surfactants, and combinations thereof. These additives may be used in amounts in a range of from 0.1 to 30 wt.-%, based on the total solids content of the aqueous adhesive composition.

The aqueous adhesive composition may comprise fillers or extenders, inorganic pigments, and combinations thereof. Suitable examples of inorganic pigments, fillers or extenders include metal oxides, hydroxides, sulfides, carbonates, sulfates, or silicate compounds of magnesium, calcium, zinc, barium, titanium, aluminum, antimony, and lead, preferably calcium carbonate, kaolin, talc, titanium dioxide, aluminum hydroxide, silica, gypsum, baryta powder, alumina white, and satin white. The fillers or extenders, inorganic pigments, and combinations thereof may be used in amounts in a range of from 30 to 60 wt.-%, based on the total solids content of the aqueous adhesive composition.

According to the present invention, the aqueous adhesive composition may be a two-component adhesive composition. Typically, the first component comprises the polymer latex of the present invention and the second component comprises the polyisocyanate compound. The first component may further comprise polyvinyl alcohol, vinyl alcohol-ethylene copolymer, silanol-modified polyvinyl alcohol, cellulose derivative, such as methylcellulose, ethylcellulose, hydroxycellulose and carboxycellulose, chitin, chitosan, starches, polyethylene glycol, polypropylene glycol, polyvinyl ether, gelatin, casein, cyclodextrin, and combinations thereof. Preferably, the first component further comprises polyvinyl alcohol. The first component may further comprise additives, fillers or extenders, inorganic pigments, and combinations thereof.

The aqueous adhesive of the present invention may be in the form of a wood glue. As used herein, the term "wood glue" refers to an adhesive to tightly bond pieces of wood together. In particular, the aqueous adhesive is in the form of a D4 wood glue. As used herein, the term "D4 wood glue" refers to wood glues, which are suitable to use for interior with frequent long-term exposure to running or condensed water and/or exterior exposed to weather. According to the European Standard EN 204:2001, a D4 wood glue has an adhesive strength of more than 4 N/mm².

The present invention further relates to a method of preparing an aqueous adhesive composition comprising: providing (i) the polymer latex of the present invention or prepared by the method of the present invention for preparing a polymer latex, and mixing with a (ii) polyisocyanate compound.

All variations with respect to the compounds used for the preparation of the aqueous adhesive composition of the present invention and their relative amounts can be as described above.

The aqueous adhesive of the present invention may be in the form of a wood glue. Preferably, the aqueous adhesive is in the form of a D4 wood glue.

The present invention will be further illustrated with reference to the following examples.

### EXAMPLES:

In the following all parts and percentages are based on weight unless otherwise specified.

### Preparation of the styrene butadiene polymer (XSBR) latex

The polymer latex compositions used in the examples and comparative examples were produced by a free radical emulsion polymerization carried out in a pressure resistant stainless-steel reactor connected to a cryostat enabling temperature control of the reactor jacket.

The initial charge in the reactor was composed of 66 pphm (parts by weight based on 100 parts of total monomer weight) deionized water and polystyrene seed with an average particle size of 35 nm (seed quantities for each example listed in Table 1 and Table 2). After heating the initial charge to 85 °C under continuous agitation using a three-layered cross beam stirrer, the polymerization reaction was initiated by starting a feed of a 3.5 %(w/w) sodium persulfate solution (1 pphm). The temperature was maintained constant at 85 °C. 2 minutes after starting the persulfate feed the monomers (quantities for each example listed in Table 1 and Table 2), the chain transfer agent tert-dodecyl mercaptan and an aqueous solution of an anionic surfactant (0.5 pphm of C₁₃-C₁₅ alkyl aryl sulfonate) were added to the reactor at a constant feed rate over a period of five hours. Thereafter, a post activation feed with 0.25 pphm sodium persulfate to reduce the residual monomers was started and continued for one hour at a batch temperature of 90 °C. After complete sodium persulfate addition, the batch was kept at 90 °C for further 30 min and agitated continuously. The product was then let cool down to ambient temperature, the pH was adjusted to 5 using a 10 wt. % aqueous sodium hydroxide solution and the total solids content of the final latex was adjusted to 47.5 wt.-%. Finally, the latex was sieved over a filter cloth with 50 µm mesh width.

The particle sizes of the latexes were determined by dynamic light scattering according to ISO 22412:2017 with the dynamic light scattering instrument Mastersizer 2000 (Malvern Panalytical (UK)).

**Table 1: Examples 1 to 6**

| **EXAMPLES** | **1 (CE)** | **2** | **3** | **4** | **5** | **6** |
|---|---|---|---|---|---|---|
| **Monomers** [parts per 100 monomers] | | | | | | |
| Styrene | 62.2 | 62.2 | 62.2 | 62.2 | 62.2 | 61.2 |
| Butadiene | 34.8 | 34.8 | 34.8 | 34.8 | 34.8 | 34.8 |
| 2-hydroxyethyl methacrylate | 2 | 2 | 2 | 2 | 2 | 2 |
| Itaconic acid | 1 | 1 | 1 | 1 | 1 | 1 |
| Acrylic acid | - | - | - | - | - | 1 |

| **Seed latex** [parts per 100 monomers] | | | | | | |
|---|---|---|---|---|---|---|
| Polystyrene seed | 1 | 0.4 | 0.3 | 0.25 | 0.2 | 0.25 |

| **Chain transfer agent** [parts per 100 monomers] | | | | | | |
|---|---|---|---|---|---|---|
| tert-dodecyl mercaptan | 0.4 | 0.2 | 0.2 | 0.2 | 0.2 | 0.5 |
| **Styrene-butadiene ratio** | 1.79 | 1.79 | 1.79 | 1.79 | 1.79 | 1.76 |
| **Particle size [nm]** | 163 | 220 | 242 | 258 | 278 | 258 |

**Table 2: Examples 7 to 12**

| **EXAMPLES** | **7 (CE)** | **8** | **9** | **10** | **11** | **12** |
|---|---|---|---|---|---|---|
| **Monomers** [parts per 100 monomers] | | | | | | |
| Styrene | 59 | 60 | 61 | 65 | 67 | 63.2 |
| Butadiene | 38 | 37 | 36 | 32 | 30 | 34.8 |
| 2-hydroxyethyl methacrylate | 2 | 2 | 2 | 2 | 2 | 1 |
| Itaconic acid | 1 | 1 | 1 | 1 | 1 | 1 |
| Acrylic acid | - | - | - | - | - | - |

| **Seed latex** [parts per 100 monomers] | | | | | | |
|---|---|---|---|---|---|---|
| Polystyrene seed | 0.25 | 0.25 | 0.25 | 0.25 | 0.25 | 0.25 |

| **Chain transfer agent** [parts per 100 monomers] | | | | | | |
|---|---|---|---|---|---|---|
| tert-dodecyl mercaptan | 0.2 | 0.2 | 0.2 | 0.2 | 0.2 | 0.2 |
| **Styrene-butadiene ratio** | 1.55 | 1.62 | 1.69 | 2.03 | 2.23 | 1.82 |
| **Particle size [nm]** | 260 | 261 | 258 | 259 | 260 | 262 |

### Wood glue preparation

A wood glue containing the polymer latex as obtained above was prepared. The wood glue consists of a component (i) (the wood glue compound) and a hardener component (ii).

### Preparation of the component (i)

### Step 1: Preparing the polyvinyl alcohol solution:

A glass beaker was placed on a magnetic stirrer and 800 mL of cold deionized water was added to the beaker. 200 g of polyvinyl alcohol (PVA) powder (Poval PVA-CST, commercially available from Kuraray) was slowly added to the gently agitated water and allowed to swell for 20 minutes. When heating up to 95 °C, the PVA dissolved. After holding the temperature for further 45 minutes, the solution was cooled down to 50 °C, 2 g of sodium metabisulfite was added and dissolved. The solution was filtered. The 20 wt.-% PVA solution was allowed to cool down to room temperature and kept overnight.

### Step 2: Preparing the wood glue compound (Component (i))

For obtaining the component A, 350 g of the XSBR latex, 4 g of the dispersing agent Dispex AA 4140 (commercially available from BASF SE (Germany)), 4 g of the wetting agent Lumiten I-SC (commercially available from BASF SE (Germany)), 1,5 g of the defoamer Foamaster 111 (commercially available from BASF SE (Germany)), 300 g of the PVA solution from step 1 and 250 g of 325 mesh calcium carbonate powder (ExCal 325, commercially available from R.E. Carroll, Inc.(USA)) were mixed and adjusted to 47.5 wt.-% solid content with 90.5 g of water. The pH was around 8 to 9 and the Brookfield viscosity RVT 20 rpm, spindle 7 was in a range between 15,000 and 30,000 cPoise.

### Step 3: Mixing components (i) and (ii)

The final wood glue formulation was obtained by a homogenizing 85 wt.-% of component (i) with 15 wt.-% of a polymeric diphenyl methane diisocyanate (Desmodur 44V20L, commercially available from Covestro (Germany)).

### Determining pot life

As explained above, the inventive wood glue is a 2K system and undergoes curing starting from the moment of mixing the two wood glue components (i) and (ii). The progressing curing causes a steady increase of the wood glue viscosity with the time. Above a certain limit the viscosity does not allow proper wood glue application anymore. The critical viscosity threshold is defined with a value of 150,000 cPoise. For practical reasons (e.g. unintended line stop), a pot life of 60 minutes is the minimum requirement from the view of laminated wood manufacturing, particularly the automated processing using robotic dispensers. Any value above 60 minutes is beneficial.

One minute after component (i) and (ii) have been mixed, Brookfield viscosity RVT 20 rpm, spindle 7 of the wood glue was determined. The viscosity steadily increased with time. The viscosity increase was monitored in 5 min intervals, until the threshold value of 150,000 cPoise was reached. The result was the period from the first measurement one minute after mixing until the first result above 150,000 cPoise was reached.

### Determining wood joint strength

This test was carried out according to the European Standard EN 205:2003. This European Standard describes tests for adhesives for the assessment of their resistance to hot and cold water. Here bonds with a thin bond-line were assessed. Panels of beech wood of the dimensions according to EN 205:2003 were glued together with the aid of the wood glues, firmly pressed, conditioned in a standard atmosphere (23 ± 2 °C and 50 ±5 % relative humidity) for 7 days and finally cut to obtain test pieces suitable for tensile shear testing. 10 test pieces with each glue were prepared and the mean value of the valid results calculated. Before determining the bond strengths with a tensile shear tester, the wood test pieces were subjected to conditions of the resistance class D4 in accordance with the European Standard EN 204:2001. The wood test pieces were subjected 7 days in standard atmosphere (23 ± 2 °C and 50 ±5 % relative humidity) followed by 6 hours in boiling water and subsequently 2 hours in water at 20 ± 2 °C.

The test pieces were tested in a tensile test machine (zwickiLine Z5.0 TS, commercially available from Zwick Roell (Germany)), capable of reaching a constant rate of traverse with a rate of 50 mm/min.

According to the European Standard EN 204:2001, the minimum adhesive strength for a D4 durability class is more than 4 N/mm².

The results of pot life and wood joint strength of wood glues comprising the XSBR latexes of Examples 1 to 12 are shown in Table 3 and Table 4.

**Table 3: Examples 1-6**

| **EXAMPLES** | **1 (CE)** | **2** | **3** | **4** | **5** | **6** |
|---|---|---|---|---|---|---|
| **Pot life** [min] | 35 | 70 | 80 | 100 | 120 | 105 |
| **Wood joint strength** [N/mm²] | 4.8 | 5.8 | 6.0 | 6.2 | 6.8 | 6.5 |

**Table 4: Examples 7-12**

| **EXAMPLES** | **7 (CE)** | **8** | **9** | **10** | **11** | **12** |
|---|---|---|---|---|---|---|
| **Pot life** [min] | 85 | 105 | 110 | 110 | 100 | 115 |
| **Wood joint strength** [N/mm²] | 3.7 | 5.6 | 6.2 | 6.4 | 5.5 | 6.4 |

## Claims

1. A polymer latex for use in an adhesive composition, obtainable by free-radical emulsion polymerization of a mixture of ethylenically unsaturated monomers comprising:
(a) a vinyl aromatic monomer;
(b) a conjugated diene monomer; and
(c) an ethylenically unsaturated monomer having an acid and/or a hydroxyl functional group;
wherein the weight ratio of the vinyl aromatic monomer (a) to the conjugated diene monomer (b) is in the range of from 1.60 to 2.30; and
wherein the polymer latex has a median particle size of at least 220 nm,
wherein the median particle size is determined by dynamic light scattering according to ISO 22412:2017.

2. The polymer latex according to claim 1, wherein the sum of the vinyl aromatic monomer (a) and the conjugated diene monomer (b) is in the range of from 85.0 to 99.0 wt.-%, preferably from 90.0 to 98.0 wt.-%, based on the total weight of the monomers in the monomer mixture.

3. The polymer latex according to claim 1 or 2, wherein the mixture of ethylenically unsaturated monomers comprises:
(a) 40 to 80 wt.-%, preferably 50 to 75 wt.-%, more preferably 55 to 70 wt.-% of the vinyl aromatic monomer, based on the total weight of the monomers in the monomer mixture;
wherein the vinyl aromatic monomer (a) preferably is selected from styrene, alpha-methyl styrene, vinyl toluene and combinations thereof, more preferably styrene.

4. The polymer latex according to any one of the preceding claims, wherein the mixture of ethylenically unsaturated monomers comprises:
(b) 15 to 50 wt.-%, preferably 20 to 45 wt.-%, more preferably 25 to 40 wt.-% of the conjugated diene monomer, based on the total weight of the monomers in the monomer mixture;
wherein the conjugated diene monomer (b) preferably is selected from 1,3-butadiene, isoprene, 2,3-dimethyl-1,3-butadiene, 2-chloro-1,3-butadiene, 1,3-pentadiene, 1,3-hexadiene, 2,4-hexadiene, 1,3-octadiene, 2-methyl-1,3-pentadiene, 2,3-dimethyl-1,3-pentadiene, 3,4-dimethyl-1,3-hexadiene, 2,3-diethyl-1,3-butadiene, 4,5-diethyl-1,3-octadiene, 3-butyl-1,3-octadiene, 3,7-dimethyl-1,3,6-octatriene, 2-methyl-6-methylene-1,7-octadiene, 7-methyl-3-methylene-1,6-octadiene, 1,3,7-octatriene, 2-ethyl-1,3-butadiene, 2-amyl-1,3-butadiene, 3,7-dimethyl-1,3,7- octatriene, 3,7-dimethyl-1,3,6-octatriene, 3,7,11- trimethyl-1,3,6,10-dodecatetraene, 7,11-dimethyl-3-methylene-1,6,10-dodecatriene, 2,6-dimethyl-2,4,6-octatriene, 2-phenyl-1,3-butadiene, 2-methyl-3-isopropyl-1,3-butadiene, 1,3-cyclohexadiene, myrcene, ocimene, farnesene and combinations thereof, more preferably 1,3-butadiene, isoprene and combinations thereof, even more preferably 1,3-butadiene.

5. The polymer latex according to any one of the preceding claims, wherein the mixture of ethylenically unsaturated monomers comprises:
(c) 0.2 to 6.0 wt.-%, preferably 0.3 to 5.0 wt.-%, more preferably 0.5 to 4.0 wt.-% of the ethylenically unsaturated monomer having an acid and/or a hydroxyl functional group, based on the total weight of the monomers in the monomer mixture;
wherein the ethylenically unsaturated monomer having an acid functional group (c) preferably is selected from ethylenically unsaturated carboxylic acid monomers, ethylenically unsaturated sulfonic acid monomers, ethylenically unsaturated phosphorous-containing acid monomers, more preferably from (meth)acrylic acid, crotonic acid, fumaric acid, itaconic acid, maleic acid, maleic anhydride, vinyl acetic acid, vinyl lactic acid, vinyl sulfonic acid, styrene sulfonic acid, 2-carboxy ethyl (meth)acrylate, phenyl vinyl sulfonate, sodium 4-vinyl benzenesulfonate, 2-methyl-2-propene-1-sulfonic acid, 2-propene-1-sulfonic acid, 4-styrenesulfonic acid, 2acrylamido-2-methyl-1-propanesulfonic acid, vinyl phosphonic acid, dimethyl vinyl phosphonate, diethyl vinyl phosphonate, diethyl allylphosphonate, allylphosphonic acid, and combinations thereof, even more preferably from (meth)acrylic acid, itaconic acid, and combinations thereof;
the ethylenically unsaturated monomer having a hydroxyl functional group (c) preferably is selected from allyl alcohol, vinyl alcohol, N-methylol (meth)acrylamide, 1-penten-3-ol, hydroxyalkyl esters of ethylenically unsaturated acids, such as hydroxyethyl (meth)acrylate, hydroxypropyl (meth)acrylate, hydroxybutyl (meth)acrylate and hydroxyethylcaprolactone acrylate, and combinations thereof, more preferably hydroxyalkyl esters of ethylenically unsaturated acids, such as hydroxyethyl (meth)acrylate, hydroxypropyl (meth)acrylate, hydroxybutyl (meth)acrylate and hydroxyethylcaprolactone acrylate, even more preferably hydroxyethyl (meth)acrylate, hydroxypropyl (meth)acrylate, hydroxybutyl methacrylate, and combinations thereof; and
the ethylenically unsaturated monomer having an acid and hydroxy functional group (c) preferably is selected from 3-allyloxy-2-hydroxy-1-propanesulfonic acid.

6. The polymer latex according to any one of the preceding claims, wherein
the weight ratio of the vinyl aromatic monomer (a) to the conjugated diene monomer (b) is in the range of from 1.70 to 2.10; and/or
wherein the polymer latex has a median particle size of at least 230 nm, preferably of at least 250 nm.

7. The polymer latex according to any one of the preceding claims, wherein the mixture of ethylenically unsaturated monomers comprises 0.05 to 3.0 wt.-%, preferably 0.10 to 2.0 wt.-%, more preferably 0.15 to 1.5 wt.-% of a chain transfer agent, wherein the weight percentage is based on the total amount of monomers in the monomer mixture; wherein the chain transfer agent preferably is selected from n-dodecyl mercaptan, carbon tetrachloride, carbon tetrabromide, bromotrichloro methane, 4-methylbenzenethiol, isooctyl 3-mercaptopropionate, tert-nonyl mercaptan, 4,4'-thiobisbenzenethiol, tert-dodecyl mercaptan, alpha-methyl styrene dimer, thioglycolic acid, 2-ethylhexyl thioglycolate, butyl 3-mercaptopropionate, 1,8-dimercapto-3,6-dioxa octane and combinations thereof, more preferably tert-dodecyl mercaptan.

8. The polymer latex according to any one of the preceding claims, wherein
the mixture of ethylenically unsaturated monomers comprises (d) 0 to 20 wt.-% of an ethylenically unsaturated monomer different from (a) to (c), based on the total weight of the monomers in the monomer mixture;
wherein the ethylenically unsaturated monomer different from (a) to (c) preferably is selected from
(d1) an ethylenically unsaturated nitrile compound, preferably selected from (meth)acrylonitrile, alpha-cyanoethyl acrylonitrile, fumaronitrile, alpha-chloronitrile and combinations thereof;
(d2) an alkyl ester of ethylenically unsaturated acid, preferably selected from methyl (meth)acrylate, ethyl (meth)acrylate, propyl (meth)acrylate, butyl (meth)acrylate, 2-ethylhexyl (meth)acrylate, and combinations thereof;
(d3) an ethylenically unsaturated compound bearing a primary or secondary amino group, preferably selected from (meth)acrylamide, 2-amino ethyl (meth)acrylate hydrochloride, 2-amino ethyl (meth) acrylamide hydrochloride, N-ethyl (meth)acrylamide, N-(3-amino propyl) (meth)acrylamide hydrochloride, N-hydroxyethyl (meth)acrylamide, N-3-(dimethylamino) propyl (meth)acrylamide, [3-(methacryloylamino)propyl] trimethylammonium, N-[tris(hydroxymethyl) methyl] (meth)acrylamide, N-phenylacrylamide, alkylacrylamide, methacrylamide polyethylene glycol) amine hydrochloride, and combinations thereof
and combinations thereof.

9. A method for preparing a polymer latex for the use in adhesives, comprising:
polymerizing by free-radical emulsion polymerization of a mixture of ethylenically unsaturated monomers comprising:
(a) a vinyl aromatic monomer;
(b) a conjugated diene monomer; and
(c) an ethylenically unsaturated monomer having an acid and/or a hydroxyl functional group;
wherein the weight ratio of the vinyl aromatic monomer (a) to the conjugated diene monomer (b) is in the range of from 1.60 to 2.30; and
wherein the polymer latex has a median particle size of at least 220 nm,
wherein the median particle size is determined by dynamic light scattering according to ISO 22412:2017.

10. The method according to claim 9, wherein the weight ratio of the vinyl aromatic monomer (a) to the conjugated diene monomer (b) is in the range of from 1.70 to 2.10; and/or
wherein the sum of the vinyl aromatic monomer (a) and the conjugated diene monomer (b) is in the range of from 85.0 to 99.0 wt.-%, preferably from 90.0 to 98.0 wt.-% based on the total weight of the monomers in the monomer mixture.

11. The method according to claim 9 or 10, wherein the mixture of ethylenically unsaturated monomers comprises at least one, more than one or all of:
(a) 40 to 80 wt.-%, preferably 50 to 75 wt.-%, more preferably 55 to 70 wt.-% of the vinyl aromatic monomer;
wherein the vinyl aromatic monomer (a) preferably is selected from styrene, alpha-methyl styrene, vinyl toluene and combinations thereof, more preferably styrene,
(b) 15 to 50 wt.-%, preferably 20 to 45 wt.-%, more preferably 25 to 40 wt.-% of the conjugated diene monomer;
wherein the conjugated diene monomer (b) preferably is selected from 1,3-butadiene, isoprene, 2,3-dimethyl-1,3-butadiene, 2-chloro-1,3-butadiene, 1,3-pentadiene, 1,3-hexadiene, 2,4-hexadiene, 1,3-octadiene, 2-methyl-1,3-pentadiene, 2,3-dimethyl-1,3-pentadiene, 3,4-dimethyl-1,3-hexadiene, 2,3-diethyl-1,3-butadiene, 4,5-diethyl-1,3-octadiene, 3-butyl-1,3-octadiene, 3,7-dimethyl-1,3,6-octatriene, 2-methyl-6-methylene-1,7-octadiene, 7-methyl-3-methylene-1,6-octadiene, 1,3,7-octatriene, 2-ethyl-1,3-butadiene, 2-amyl-1,3-butadiene, 3,7-dimethyl-1,3,7- octatriene, 3,7-dimethyl-1,3,6-octatriene, 3,7,11-trimethyl-1,3,6,10-dodecatetraene, 7,11-dimethyl-3-methylene-1,6,10-dodecatriene, 2,6-dimethyl-2,4,6-octatriene, 2-phenyl-1,3-butadiene, 2-methyl-3-isopropyl-1,3-butadiene, 1,3-cyclohexadiene, myrcene, ocimene, farnesene and combinations thereof, more preferably 1,3-butadiene, isoprene and combinations thereof, even more preferably 1,3-butadiene; and
(c) 0.5 to 5.0 wt.-%, preferably 1.0 to 4.0 wt.-%, more preferably 1.0 to 3.0 wt.-% of the ethylenically unsaturated monomer having an acid and/or a hydroxyl functional group;
wherein the ethylenically unsaturated monomer having an acid functional group (c) preferably is selected from ethylenically unsaturated carboxylic acid monomers, ethylenically unsaturated sulfonic acid monomers, ethylenically unsaturated phosphorous-containing acid monomers, more preferably from (meth)acrylic acid, crotonic acid, fumaric acid, itaconic acid, maleic acid, maleic anhydride, vinyl acetic acid, vinyl lactic acid, vinyl sulfonic acid, styrene sulfonic acid, 2-carboxy ethyl (meth)acrylate, phenyl vinyl sulfonate, sodium 4-vinyl benzenesulfonate, 2-methyl-2-propene-1-sulfonic acid, 2-propene-1-sulfonic acid, 4-styrenesulfonic acid, 2-acrylamido-2-methyl-1-propanesulfonic acid, vinyl phosphonic acid, dimethyl vinyl phosphonate, diethyl vinyl phosphonate, diethyl allylphosphonate, allylphosphonic acid, and combinations thereof, even more preferably from (meth)acrylic acid, itaconic acid, and combinations thereof;
the ethylenically unsaturated monomer having a hydroxyl functional group (c) preferably is selected from allyl alcohol, vinyl alcohol, N-methylol (meth)acrylamide, 1-penten-3-ol, hydroxyalkyl esters of ethylenically unsaturated acids, such as hydroxyethyl (meth)acrylate, hydroxypropyl (meth)acrylate, hydroxybutyl (meth)acrylate and hydroxyethylcaprolactone acrylate, and combinations thereof, more preferably hydroxyalkyl esters of ethylenically unsaturated acids, such as hydroxyethyl (meth)acrylate, hydroxypropyl (meth)acrylate, hydroxybutyl (meth)acrylate and hydroxyethylcaprolactone acrylate, even more preferably hydroxyethyl (meth)acrylate, hydroxypropyl (meth)acrylate, hydroxybutyl methacrylate, and combinations thereof; and
the ethylenically unsaturated monomer having an acid and hydroxy functional group (c) preferably is selected from 3-allyloxy-2-hydroxy-1-propanesulfonic acid,
the weight percentages being based on the total weight of the monomers in the monomer mixture.

12. The method according to any one of claims 9 to 11, wherein the mixture of ethylenically unsaturated monomers comprises 0.05 to 3.0 wt.-%, preferably 0.10 to 2.0 wt.-%, more preferably 0.15 to 1.5 wt.-% of a chain transfer agent, wherein the weight percentage is based on the total amount of monomers in the monomer mixture; wherein the chain transfer agent preferably is selected from n-dodecyl mercaptan, carbon tetrachloride, carbon tetrabromide, bromotrichloro methane, 4-methylbenzenethiol, isooctyl 3-mercaptopropionate, tert-nonyl mercaptan, 4,4'-thiobisbenzenethiol, tert-dodecyl mercaptan, alpha-methyl styrene dimer, thioglycolic acid, 2-ethylhexyl thioglycolate, butyl 3-mercaptopropionate, 1,8-dimercapto-3,6-dioxa octane and combinations thereof, more preferably tert-dodecyl mercaptan.

13. The method according to any one of claims 9 to 12, wherein the polymer latex has a median particle size of at least 230 nm, preferably of at least 250 nm.

14. Use of the polymer latex according to any one of claims 1 to 8 or prepared by the method according to any one of claims 9 to 13 for the preparation of an aqueous adhesive composition, preferably a two-component aqueous adhesive composition.

15. An aqueous adhesive composition comprising (i) the polymer latex according to any one of claims 1 to 8 or prepared by the method according to any one of claims 9 to 13 and (ii) a polyisocyanate compound.

16. The aqueous adhesive composition according to claim 15, wherein the (ii) polyisocyanate compound comprises toluene diisocyanate, hydrogenated toluene diisocyanate, methylene diphenyl diisocyanate, hydrogenated methylene diphenyl diisocyanate, triphenylmethane triisocyanate, 1,2,4-benzene triisocyanate, polymethylene polyphenyl polyisocyanate, xylene diisocyanate, tetramethyl xylylene diisocyanate, 1,6-hexamethylene diisocyanate, 2,2,4-trimethyl hexamethylene diisocyanate, 2,4,4-trimethyl hexamethylene diisocyanate, isophorone diisocyanate, and 4,4'-methylene-bis(cyclohexyl isocyanate); and/or
further comprising polyvinyl alcohol, vinyl alcohol-ethylene copolymer, silanol-modified polyvinyl alcohol, cellulose derivative, such as methylcellulose, ethylcellulose, hydroxycellulose and carboxycellulose, chitin, chitosan, starches, polyethylene glycol, polypropylene glycol, polyvinyl ether, gelatin, casein, cyclodextrin, and combinations thereof, preferably polyvinyl alcohol.

17. The aqueous adhesive composition according to claim 15 or 16, being a two-component adhesive composition, wherein a first component comprises the polymer latex and optionally polyvinyl alcohol, vinyl alcohol-ethylene copolymer, silanol-modified polyvinyl alcohol, cellulose derivative, such as methylcellulose, ethylcellulose, hydroxycellulose and carboxycellulose, chitin, chitosan, starches, polyethylene glycol, polypropylene glycol, polyvinyl ether, gelatin, casein, cyclodextrin, and combinations thereof, preferably polyvinyl alcohol; and a second component comprises the polyisocyanate compound.

18. The aqueous adhesive composition according to any one of claims 15 to 17, comprising from 1 to 50 wt.-%, preferably from 2 to 45 wt.-%, more preferably from 5 to 40 wt.-% of the polyisocyanate compound (ii), based on the total solids content of the aqueous adhesive composition.

19. The aqueous adhesive according to claims 15 to 18 in the form of a wood glue.

20. A method of preparing an aqueous adhesive composition comprising: providing (i) the polymer latex according to any one of claims 1 to 8 or prepared by the method according to any one of claims 9 to 13; and mixing with a (ii) polyisocyanate compound, wherein the aqueous adhesive composition preferably is a wood glue.

## Patentansprüche

1. Ein Polymerlatex für die Verwendung in einer Klebstoffzusammensetzung, erhältlich durch radikalische Emulsionspolymerisation einer Mischung von ethylenisch ungesättigten Monomeren umfassend:
(a) ein vinylaromatisches Monomer;
(b) ein konjugiertes Dienmonomer; und
(c) ein ethylenisch ungesättigtes Monomer mit einer säure- und/oder hydroxylfunktionellen Gruppe;
wobei das Gewichtsverhältnis von vinylaromatischem Monomer (a) zu dem konjugierten Dienmonomer (b) im Bereich von 1,60 bis 2,30 liegt; und wobei der Polymerlatex eine mittlere Teilchengröße von mindestens 220 nm aufweist, wobei die mittlere Teilchengröße durch dynamische Lichtstreuung gemäß ISO 22412:2017 bestimmt wird.

2. Der Polymerlatex gemäß Anspruch 1, wobei die Summe des vinylaromatischen Monomers (a) und des konjugierten Dienmonomers (b) im Bereich von 85,0 bis 99,0 Gew.-% liegt, vorzugsweise von 90,0 bis 98,0 Gew.-%, bezogen auf das Gesamtgewicht der Monomere in der Monomermischung.

3. Der Polymerlatex gemäß Anspruch 1 oder 2, wobei die Mischung von ethylenisch ungesättigten Monomeren umfasst:
(a) 40 bis 80 Gew.-%, bevorzugt 50 bis 75 Gew.-%, bevorzugter 55 bis 70 Gew.-% des vinylaromatischen Monomers, bezogen auf das Gesamtgewicht der Monomere in der Monomermischung;
wobei das vinylaromatische Monomer (a) vorzugsweise ausgewählt ist aus Styrol, alpha-Methylstyrol, Vinyltoluol und Kombinationen davon, bevorzugter Styrol.

4. Der Polymerlatex gemäß irgendeinem der vorstehenden Ansprüche, wobei die Mischung aus ethylenisch ungesättigten Monomeren umfasst:
(b) 15 bis 50 Gew.-%, bevorzugt 20 bis 45 Gew.-%, bevorzugter 25 bis 40 Gew.-% des konjugierten Dienmonomers, bezogen auf das Gesamtgewicht der Monomere in der Monomermischung;
wobei das konjugierte Dienmonomer (b) vorzugsweise ausgewählt ist aus 1,3-Butadien, Isopren, 2,3-Dimethyl-1,3-butadien, 2-Chlor-1,3-butadien, 1,3-Pentadien, 1,3-Hexadien, 2,4-Hexadien, 1,3-Octadien, 2-Methyl-1,3-pentadien, 2,3-Dimethyl-1,3-pentadien, 3,4-Dimethyl-1,3-hexadien, 2,3-Diethyl-1,3-butadien, 4,5-Diethyl-1,3-octadien, 3-Butyl-1,3-octadien, 3,7-Dimethyl-1,3,6-octatrien, 2-Methyl-6-methylen-1,7-octadien, 7-Methyl-3-methylen-1,6-octadien, 1,3,7-Octatrien, 2-Ethyl-1,3-butadien, 2-Amyl-1,3-butadien, 3,7-Dimethyl-1,3,7- octatrien, 3,7-Dimethyl-1,3,6-octatrien, 3,7,11-Trimethyl-1,3,6,10-dodecatetraen, 7,11-Dimethyl-3-methylen-1,6,10-dodecatrien, 2,6-Dimethyl-2,4,6-octatrien, 2-Phenyl-1,3-butadien, 2-methyl-3-isopropyl-1,3-butadien, 1,3-Cyclohexadien, Myrcen, Ocimen, Farnesen und Kombinationen davon, bevorzugter 1,3-Butadien, Isopren und Kombinationen davon, noch bevorzugter 1,3-Butadien.

5. Der Polymerlatex gemäß irgendeinem der vorstehenden Ansprüche, wobei die Mischung aus ethylenisch ungesättigten Monomeren umfasst:
(c) 0,2 bis 6,0 Gew.-%, vorzugsweise 0,3 bis 5,0 Gew.-%, bevorzugter 0,5 bis 4,0 Gew.-% des ethylenisch ungesättigten Monomers mit einer säure- und/oder einer hydroxylfunktionellen Gruppe, bezogen auf das Gesamtgewicht der Monomere in der Monomermischung; wobei das ethylenisch ungesättigte Monomer mit einer säurefunktionellen Gruppe (c) bevorzugt ausgewählt ist aus ethylenisch ungesättigten Carbonsäuremonomeren, ethylenisch ungesättigten Sulfonsäuremonomeren, ethylenisch ungesättigten phosphorhaltigen Säuremonomeren, bevorzugter aus (Meth)acrylsäure, Crotonsäure, Fumarsäure, Itaconsäure, Maleinsäure, Maleinsäureanhydrid, Vinylessigsäure, Vinylmilchsäure, Vinylsulfonsäure, Styrolsulfonsäure, 2-Carboxyethyl(meth)acrylsäureester, Phenylvinylsulfonat, Natrium-4-vinylbenzolsulfonat, 2-Methyl-2-propen-1-sulfonsäure, 2-Propen-1-sulfonsäure, 4-Styrolsulfonsäure, 2-Acrylamido-2-methyl-1-propansulfonsäure, Vinylphosphonsäure, Dimethylvinylphosphonat, Diethylvinylphosphonat, Diethylallylphosphonat, Allylphosphonat, Allylphosphonsäure und Kombinationen davon, noch bevorzugter aus (Meth)acrylsäure, Itaconsäure und Kombinationen davon;
das ethylenisch ungesättigte Monomer mit einer hydroxylfunktionellen Gruppe (c) vorzugsweise ausgewählt ist aus Allylalkohol, Vinylalkohol, N-Methylol(meth)acrylamid, 1-Penten-3-ol, Hydroxyalkylestern von ethylenisch ungesättigten Säuren, wie etwa Hydroxyethyl(meth)acrylat, Hydroxypropyl(meth)acrylat, Hydroxybutyl(meth)acrylat und Hydroxyethylcaprolactonacrylat und Kombinationen davon, bevorzugter Hydroxyalkylestern von ethylenisch ungesättigten Säuren, wie etwa Hydroxyethyl(meth)acrylat, Hydroxypropyl(meth)acrylat, Hydroxybutyl(meth)acrylat und Hydroxyethylcaprolactonacrylat, noch bevorzugter Hydroxyethyl(meth)acrylat, Hydroxypropyl(meth)acrylat, Hydroxybutylmethacrylat und Kombinationen davon; und
das ethylenisch ungesättigte Monomer mit einer säure- und hydroxylfunktionellen Gruppe (c) vorzugsweise ausgewählt ist aus 3-Allyloxy-2-hydroxy-1-propansulfonsäure.

6. Der Polymerlatex gemäß irgendeinem der vorstehenden Ansprüche, wobei das Gewichtsverhältnis von dem vinylaromatischen Monomer (a) zu dem konjugierten Dienmonomer (b) im Bereich von 1,70 zu 2,10 liegt, und/oder wobei der Polymerlatex eine mittlere Teilchengröße von mindestens 230 nm, vorzugsweise mindestens 250 nm aufweist.

7. Der Polymerlatex gemäß irgendeinem der vorstehenden Ansprüche, wobei die Mischung an ethylenisch ungesättigten Monomeren 0,05 bis 3,0 Gew.-%, vorzugsweise 0,10 bis 2,0 Gew.-%, bevorzugter 0,15 bis 1,5 Gew.-% eines Kettenübertragungsmittels umfasst, wobei die Gewichtsprozente auf das Gesamtgewicht der Monomere in der Monomermischung bezogen sind, wobei das Kettenübertragungsmittel vorzugsweise ausgewählt ist aus n-Dodecylmercaptan, Tetrachlorkohlenstoff, Tetrabromkohlenstoff, Bromtrichlormethan, 4-Methylbenzolthiol, Isooctyl-3-mercaptopropionat, tert.-Nonylmercaptan, 4,4'-Thiobisbenzolthiol, tert.-Dodecylmercaptan, alpha-Methylstyroldimer, Thioglykolsäure, 2-Ethylhexylthioglykolat, Butyl-3-mercaptopropionat, 1,8-Dimercapto-3,6-dioxaoctan und Kombinationen davon, bevorzugter tert.-Dodecylmercaptan.

8. Der Polymerlatex gemäß irgendeinem der vorstehenden Ansprüche, wobei die Mischung von ethylenisch ungesättigten Monomeren umfasst: (d) 0 bis 20 Gew.-% eines ethylenisch ungesättigten Monomers, das sich von (a) bis (c) unterscheidet, bezogen auf das Gesamtgewicht der Monomere in der Monomermischung;
wobei das ethylenisch ungesättigte Monomer, das sich von (a) bis (c) unterscheidet, vorzugsweise ausgewählt ist aus
(d1) einer ethylenisch ungesättigten Nitrilverbindung, vorzugsweise ausgewählt aus (Meth)acrylonitril, alpha-Cyanoethylacrylonitril, Fumaronitril, alpha-Chloronitril und Kombinationen davon;
(d2) einem Alkylester einer ethylenisch ungesättigten Säure, vorzugsweise ausgewählt aus Methyl(meth)acrylat, Ethyl(meth)acrylat, Propyl(meth)acrylat, Butyl(meth)acrylat, 2-Ethylhexyl(meth)acrylat und Kombinationen davon;
(d3) einer ethylenisch ungesättigten Verbindung, die eine primäre oder sekundäre Aminogruppe trägt, vorzugsweise ausgewählt aus (Meth)acrylamid, 2-Aminoethyl(meth)acrylat-Hydrochlorid, 2-Aminoethyl(meth)acrylamid-Hydrochlorid, N-Ethyl(meth)acrylamid, N-(3-Aminopropyl)-(meth)acrylamid-Hydrochlorid, N-Hydroxyethyl(meth)-acrylamid, N-3-(Dimethylamino)propyl(meth)acrylamid, [3-(Methacryloylamino)propyl]trimethylammonium, N-[tris(Hydroxymethyl)-methyl](meth)acrylamid, N-Phenylacrylamid, Alkylacrylamid, Methacrylamidpoly(ethylenglykol)amin-Hydrochlorid und Kombinationen davon
und Kombinationen davon.

9. Ein Verfahren zur Herstellung eines Polymerlatex zur Verwendung in Klebstoffen umfassend:
Polymerisieren einer Mischung von ethylenisch ungesättigten Monomeren, umfassend:
(a) ein vinylaromatisches Monomer,
(b) ein konjugiertes Dienmonomer und
(c) ein ethylenisch ungesättigtes Monomer mit einer säure- und/oder einer hydroxylfunktionellen Gruppe,
durch radikalische Emulsionspolymerisation,
wobei das Gewichtsverhältnis von dem vinylaromatischen Monomer (a) zu dem konjugierten Dienmonomer (b) im Bereich von 1,60 bis 2,30 liegt und
wobei der Polymerlatex eine mittlere Teilchengröße von mindestens 220 nm aufweist, wobei die mittlere Teilchengröße durch dynamische Lichtstreuung gemäß ISO 22412:2017 bestimmt wird.

10. Das Verfahren gemäß Anspruch 9, wobei das Gewichtsverhältnis von dem vinylaromatischen Monomer (a) zu dem konjugierten Dienmonomer (b) im Bereich von 1,70 bis 2,10 liegt und/oder
wobei die Summe von dem vinylaromatischen Monomer (a) und dem konjugierten Dienmonomer (b) im Bereich von 85,0 bis 99,0 Gew.-%, vorzugsweise von 90,0 bis 98,0 Gew.-% liegt, bezogen auf das Gesamtgewicht an Monomeren in der Monomermischung.

11. Das Verfahren gemäß Anspruch 9 oder 10, wobei die Mischung von ethylenisch ungesättigten Monomeren mindestens eines, mehr als eines oder alle von umfasst:
(a) 40 bis 80 Gew.-%, bevorzugt 50 bis 75 Gew.-%, bevorzugter 55 bis 70 Gew.-% des vinylaromatischen Monomers;
wobei das vinylaromatische Monomer (a) bevorzugt ausgewählt ist aus Styrol, alpha-Methylstyrol, Vinyltoluol und Kombinationen davon, bevorzugter Styrol,
(b) 15 bis 50 Gew.-%, bevorzugt 20 bis 45 Gew.-%, bevorzugter 25 bis 40 Gew.-% des konjugierten Dienmonomers;
wobei das konjugierte Dienmonomer (b) bevorzugt ausgewählt ist aus 1,3-Butadien, Isopren, 2,3-Dimethyl-1,3-butadien, 2-Chlor-1,3-butadien, 1,3-Pentadien, 1,3-Hexadiene, 2,4-Hexadien, 1,3-Octadien, 2-Methyl-1,3-pentadiene, 2,3-Dimethyl-1,3-pentadien, 3,4-Dimethyl-1,3-hexadien, 2,3-Diethyl-1,3-butadien, 4,5-Diethyl-1,3-octadien, 3-Butyl-1,3-octadien, 3,7-Dimethy-1,3,6-octatrien, 2-Methyl-6-methylen-1,7-octadien, 7-Methyl-3-methylen-1,6-octadien, 1,3,7-Octatrien, 2-Ethyl-1,3-butadien, 2-Amyl-1,3-butadien, 3,7-Dimethyl-1,3,7-octatrien, 3,7-Dimethyl-1,3,6-octatrien, 3,7,11-Trimethyl-1,3,6,10-dodecatetraen, 7,11-Dimethyl-3-methylen-1,6,10-dodecatrien, 2,6-Dimethyl-2,4,6-octatrien, 2-Phenyl-1,3-butadien, 2-Methyl-3-isopropyl-1,3-butadien, 1,3-Cyclohexadien, Myrcen, Ocimen, Farnesen und Kombinationen davon, bevorzugter 1,3-Butadien, Isopren und Kombinationen davon und noch bevorzugter 1,3-Butadien; und
(c) 0,5 bis 5,0 Gew.-%, bevorzugt 1,0 bis 4,0 Gew.-%, bevorzugter 1,0 bis 3,0 Gew.-% des ethylenisch ungesättigten Monomers mit einer säure- und/oder hydroxylfunktionellen Gruppe; wobei das ethylenisch ungesättigte Monomer mit einer säurefunktionellen Gruppe (c) bevorzugt ausgewählt ist aus ethylenisch ungesättigten Carbonsäuremonomeren, ethylenisch ungesättigten Sulfonsäuremonomeren, ethylenisch ungesättigten Phosphorsäure enthaltenden Monomeren, bevorzugter aus (Meth)acrylsäure, Crotonsäure, Fumarsäure, Itaconsäure, Maleinsäure, Maleinsäureanhydrid, Vinylessigsäure, Vinylmilchsäure, Vinylsulfonsäure, Styrolsulfonsäure, 2-Carboxyethyl(meth)acrylat, Phenylvinylsulfonat, Natrium-4-vinylbenzolsulfonat, 2-Methyl-2-propen-1-sulfonsäure, 2-Propen-1-sulfonsäure, 4-Styrolsulfonsäure, 2-Acrylamid-2-methyl-1-propansulfonsäure, Vinylphosphonsäure, Dimethylvinylphosphonat, Diethylvinylphosphonat, Diethylallylphosphonat, Allylphosphonsäure und Kombinationen davon, noch bevorzugter aus (Meth)acrylsäure, Itaconsäure und Kombinationen davon;
das ethylenisch ungesättigte Monomer mit der hydroxylfunktionellen Gruppe (c) bevorzugt ausgewählt ist aus Allylalkohol, Vinylalkohol, N-Methylol(meth)acrylamid, 1-Penten-3-ol, Hydroxyalkylestern von ethylenisch ungesättigten Säuren, wie etwa Hydroxyethyl(meth)acrylat, Hydroxypropyl(meth)acrylat, Hydroxybutyl(meth)acrylat und Hydroxyethylcaprolactonacrylat und Kombinationen davon, bevorzugter aus Hydroxyalkylestern von ethylenisch ungesättigten Säuren, wie etwa Hydroxyethyl-(meth)acrylat, Hydroxypropyl(meth)acrylat, Hydroxybutyl(meth)acrylat und Hydroxyethylcaprolactonacrylat, noch bevorzugter Hydroxyethyl(meth)acrylat, Hydroxypropyl(meth)acrylat, Hydroxybutylmethacrylat und Kombinationen davon; und
das ethylenisch ungesättigte Monomer mit säure- und hydroxylfunktionellen Gruppen (c) bevorzugt ausgewählt ist aus 3-Allyloxy-2-hydroxy-1-propansulfonsäure,
die Gewichtsprozente beziehen sich auf das Gesamtgewicht der Monomere in der Monomermischung.

12. Das Verfahren gemäß irgendeinem der Ansprüche 9 bis 11, wobei die Mischung von ethylenisch ungesättigten Monomeren 0,05 bis 3,0 Gew.-%, bevorzugt 0,10 bis 2,0 Gew.-%, bevorzugter 0,15 bis 1,5 Gew.-% eines Kettenübertragungsmittels umfasst, wobei die Gewichtsprozente bezogen sind auf die Gesamtmenge von Monomeren in der Monomermischung, wobei das Kettenübertragungsmittel vorzugsweise ausgewählt ist aus n-Dodecylmercaptan, Tetrachlorkohlenstoff, Tetrabromkohlenstoff, Bromotrichloromethan, 4-Methylbenzolthiol, Isooctyl-3-mercaptoproprionat, tert.-Nonylmercaptan, 4,4'-Thiobisbenzolthiol, tert.-Dodecylmercaptan, a-Methylstyroldimer, Thioglykolsäure, 2-Ethylhexylthioglycolat, Butyl-3-mercaptopropionat, 1,8-Dimercapto-3,6-dioxaoctan und Kombinationen davon, bevorzugter tert.-Dodecylmercaptan.

13. Das Verfahren gemäß irgendeinem der Ansprüche 9 bis 12, wobei der Polymerlatex eine mittlere Teilchengröße von mindestens 230 nm, bevorzugt mindestens 250 nm aufweist.

14. Verwendung des Polymerlatex gemäß irgendeinem der Ansprüche 1 bis 8 oder hergestellt nach dem Verfahren gemäß irgendeinem der Ansprüche 9 bis 13 zur Herstellung einer wässrigen Klebstoffzusammensetzung, bevorzugt einer wässrigen 2-Komponenten-Klebstoffzusammensetzung.

15. Eine wässrige Klebstoffzusammensetzung umfassend (i) den Polymerlatex gemäß irgendeinem der Ansprüche 1 bis 8 oder hergestellt nach dem Verfahren gemäß irgendeinem der Ansprüche 9 bis 13 und (ii) eine Polyisocyanatverbindung.

16. Die wässrige Klebstoffzusammensetzung gemäß Anspruch 15, wobei die (ii) Polyisocyanatverbindung Toluoldiisocyanat, hydriertes Toluoldiisocyanat, Methylendiphenyldiisocyanat, hydriertes Methylendiphenyldiisocyanat, Triphenylmethantriisocyanat, 1,2,4-Benzoltriisocyanat, Polymethylenpolyphenylpolyisocyanat, Xyloldiisocyanat, Tetramethylxyloldiisocyanat, 1,6-Hexamethylendiisocyanat, 2,2,4-Trimethylhexamethylendiisocyanat, 2,4,4-Trimethylhexamethylendiisocyanat, Isophorondiisocyanat und 4,4'-Methylenbis(cyclohexylisocyanat) umfasst; und/oder des Weiteren Polyvinylalkohol, Vinylalkohol-Ethylen-Copolymer, silanolmodifizierten Polyvinylalkohol, Cellulosederivat, wie etwa Methylcellulose, Ethylcellulose, Hydroxycellulose und Carboxycellulose, Chitin, Chitosan, Stärken, Polyethylenglykol, Polypropylenglykol, Polyvinylether, Gelatine, Casein, Cyclodextrin und Kombinationen davon, bevorzugt Polyvinylalkohol umfasst.

17. Die wässrige Klebstoffzusammensetzung gemäß Anspruch 15 oder 16, wobei die eine 2-Komponenten-Klebstoffzusammensetzung ist, wobei eine erste Komponente den Polymerlatex und wahlweise Polyvinylalkohol, Vinylalkohol-Ethylen-Copolymer, silanolmodifizierten Polyvinylalkohol, Cellulosederivat, wie etwa Methylcellulose, Ethylcellulose, Hydroxycellulose und Carboxycellulose, Chitin, Chitosan, Stärken, Polyethylenglykol, Polypropylenglykol, Polyvinylether, Gelatine, Casein, Cyclodextrin und Kombinationen davon, bevorzugt Polyvinylalkohol umfasst, und eine zweite Komponente die Polyisocyanatverbindung umfasst.

18. Die wässrige Klebstoffzusammensetzung gemäß irgendeinem der Ansprüche 15 bis 17, umfassend von 1 bis 50 Gew.-%, bevorzugt von 2 bis 45 Gew.-%, bevorzugter von 5 bis 40 Gew.-% der Polyisocyanatverbindung (ii), bezogen auf den Gesamtfeststoffgehalt der wässrigen Klebstoffzusammensetzung.

19. Der wässrige Klebstoff gemäß den Ansprüchen 15 bis 18 in Form eines Holzleims.

20. Ein Verfahren zur Herstellung einer wässrigen Klebstoffzusammensetzung umfassend: (i) Bereitstellen des Polymerlatex gemäß irgendeinem der Ansprüche 1 bis 8 oder hergestellt nach dem Verfahren gemäß irgendeinem der Ansprüche 9 bis 13, und Vermischen mit einer (ii) Polyisocyanatverbindung, wobei die wässrige Klebstoffzusammensetzung bevorzugt ein Holzleim ist.

## Revendications

1. Latex de polymère pour utilisation dans une composition d'adhésif, accessible par polymérisation en émulsion par voie radicalaire d'un mélange de monomères à insaturation éthylénique qui comprend :
a) un monomère vinyl-aromatique,
b) un monomère diène conjugué,
c) et un monomère à insaturation éthylénique porteur d'un groupe fonctionnel acide et/ou d'un groupe fonctionnel hydroxyle,
et dans lequel le rapport pondéral du monomère vinyl-aromatique (a) au monomère diène conjugué (b) se situe dans l'intervalle allant de 1,60 à 2,30,
et lequel latex de polymère présente une taille médiane de particules d'au moins 220 nm, cette taille médiane de particules étant déterminée par diffusion dynamique de la lumière selon la norme ISO 22412:2017.

2. Latex de polymère conforme à la revendication 1, dans lequel le total des proportions du monomère vinyl-aromatique (a) et du monomère diène conjugué (b) se situe dans l'intervalle allant de 85,0 à 99,0 % en poids, et de préférence de 90,0 à 98,0 % en poids, par rapport au poids total des monomères présents dans le mélange de monomères.

3. Latex de polymère conforme à la revendication 1 ou 2, dans lequel le mélange de monomères à insaturation éthylénique comprend :
a) de 40 à 80 % en poids, de préférence de 50 à 75 % en poids, et mieux encore de 55 à 70 % en poids de monomère vinyl-aromatique, par rapport au poids total des monomères présents dans le mélange de monomères,
lequel monomère vinyl-aromatique (a) est de préférence choisi parmi les styrène, alpha-méthyl-styrène et vinyl-toluène et leurs combinaisons, et mieux encore, est du styrène.

4. Latex de polymère conforme à l'une des revendications précédentes, dans lequel le mélange de monomères à insaturation éthylénique comprend :
b) de 15 à 50 % en poids, de préférence de 20 à 45 % en poids, et mieux encore de 25 à 40 % en poids de monomère diène conjugué, par rapport au poids total des monomères présents
dans le mélange de monomères,
lequel monomère diène conjugué (b) est de préférence choisi parmi les suivants : 1,3-butadiène, isoprène, 2,3-diméthyl-1,3-butadiène, 2-chloro-1,3-butadiène, 1,3-pentadiène, 1,3-hexadiène, 2,4-hexadiène, 1,3-octadiène, 2-méthyl-1,3-pentadiène, 2,3-diméthyl-1,3-pentadiène, 3,4-diméthyl-1,3-hexadiène, 2,3-diéthyl-1,3-butadiène, 4,5-diéthyl-1,3-octadiène, 3-butyl-1,3-octadiène, 3,7-diméthyl-1,3,6-octatriène, 2-méthyl-6-méthylène-1,7-octadiène, 7-méthyl-3-méthylène-1,6-octadiène, 1,3,7-octatriène, 2-éthyl-1,3-butadiène, 2-amyl-1,3-butadiène, 3,7-diméthyl-1,3,7-octatriène, 3,7-diméthyl-1,3,6-octatriène, 3,7,11-triméthyl-1,3,6,10-dodécatétraène, 7,11-diméthyl-3-méthylène-1,6,10-dodécatriène, 2,6-diméthyl-2,4,6-octatriène, 2-phényl-1,3-butadiène, 2-méthyl-3-isopropyl-1,3-butadiène, 1,3-cyclohexadiène, myrcène, ocimène, farnésène et leurs combinaisons, et mieux encore, parmi les 1,3-butadiène, isoprène et leurs combinaisons, et même encore mieux, est du 1,3-butadiène.

5. Latex de polymère conforme à l'une des revendications précédentes, dans lequel le mélange de monomères à insaturation éthylénique comprend :
c) de 0,2 à 6,0 % en poids, de préférence de 0,3 à 5,0 % en poids, et mieux encore de 0,5 à 4,0 % en poids de monomère à insaturation éthylénique porteur d'un groupe fonctionnel acide et/ou hydroxyle, par rapport au poids total des monomères présents dans le mélange de monomères,
lequel monomère à insaturation éthylénique porteur d'un groupe fonctionnel acide (c) est de préférence choisi parmi les monomères de type acide carboxylique à insaturation éthylénique, les monomères de type acide sulfonique à insaturation éthylénique, et les monomères de type acide phosphoré à insaturation éthylénique, mieux encore parmi les suivants : acide acrylique, acide méthacrylique, acide crotonique, acide fumarique, acide itaconique, acide maléique, anhydride maléique, acide vinyl-acétique, acide vinyl-lactique, acide vinyl-sulfonique, acide styrène-sulfonique, acrylate ou méthacrylate de 2-carboxy-éthyle, vinyl-sulfonate de phényle, 4-vinyl-benzènesulfonate de sodium, acide 2-méthyl-2-propène-1-sulfonique, acide 2-propène-1-sulfonique, acide styrène-4-sulfonique, acide 2-acrylamido-2-méthyl-propane-1-sulfonique, acide vinyl-phosphonique, vinyl-phosphonate de diméthyle, vinyl-phosphonate de diéthyle, allyl-phosphonate de diméthyle, acide allyl-phosphonique, et leurs combinaisons, et même encore mieux, parmi l'acide acrylique, l'acide méthacrylique, l'acide itaconique et leurs combinaisons,
lequel monomère à insaturation éthylénique porteur d'un groupe fonctionnel hydroxyle (c) est de préférence choisi parmi les suivants : alcool allylique, alcool vinylique, N-hydroxyméthyl-(méth)acrylamide, 1-pentène-3-ol, esters d'hydroxy-alkyle d'acides à insaturation éthylénique, tels les (méth)acrylate d'hydroxy-éthyle, (méth)acrylate d'hydroxy-propyle, (méth)acrylate d'hydroxy-butyle, et acrylate d'hydroxy-éthyl-caprolactone, et leurs combinaisons, mieux encore parmi les esters d'hydroxy-alkyle d'acides à insaturation éthylénique, tels les (méth)acrylate d'hydroxy-éthyle, (méth)acrylate d'hydroxy-propyle, (méth)acrylate d'hydroxy-butyle, et acrylate d'hydroxy-éthyl-caprolactone, et même encore mieux parmi les (méth)acrylate d'hydroxy-éthyle, (méth)acrylate d'hydroxy-propyle et méthacrylate d'hydroxy-butyle et leurs combinaisons,
et lequel monomère à insaturation éthylénique porteur de groupes fonctionnels acide et hydroxyle (c) est de préférence choisi comme étant de l'acide 3-allyloxy-2-hydroxy-propane-1-sulfonique.

6. Latex de polymère conforme à l'une des revendications précédentes, pour lequel le rapport pondéral du monomère vinyl-aromatique (a) au monomère diène conjugué (b) se situe dans l'intervalle allant de 1,70 à 2,10,
et/ou dans lequel latex de polymère les particules ont une taille médiane valant au moins 230 nm, et de préférence, au moins 250 nm.

7. Latex de polymère conforme à l'une des revendications précédentes, pour lequel le mélange de monomères à insaturation éthylénique comprend de 0,05 à 3,0 % en poids, de préférence de 0,10 à 2,0 % en poids et mieux encore de 0,15 à 1,5 % en poids d'un agent de transfert de chaîne, ce pourcentage pondéral étant rapporté à la quantité totale des monomères présents dans le mélange, lequel agent de transfert de chaîne est de préférence choisi parmi les suivants : n-dodécyl-mercaptan, tétrachlorure de carbone, tétrabromure de carbone, bromo-trichloro-méthane, 4-méthyl-benzènethiol, 3-mercapto-propionate d'isooctyle, tertiononyl-mercaptan, 4,4'-thio-bis(benzènethiol), tertiododécyl-mercaptan, dimère d'alpha-méthyl-styrène, acide thioglycolique, thioglycolate de 2-éthyl-hexyle, 3-mercapto-propionate de butyle, 1,8-dimercapto-3,6-dioxa-octane et leurs combinaisons, et mieux encore, est du tertiodocécyl-mercaptan.

8. Latex de polymère conforme à l'une des revendications précédentes, pour lequel le mélange de monomères à insaturation éthylénique comprend (d) de 0 à 20 % en poids d'un monomère à insaturation éthylénique différent des monomères (a) à (c), par rapport au poids total des monomères présents dans le mélange de monomères, lequel monomère à insaturation éthylénique différent des monomères (a) à (c) est de préférence choisi parmi les suivants :
d1) un composé de type nitrile à insaturation éthylénique, de préférence choisi parmi les acrylonitrile, méthacrylonitrile, alpha-cyanoéthyl-acrylonitrile, fumaronitrile, alpha-chloronitrile et leurs combinaisons,
d2) un ester d'alkyle d'un acide à insaturation éthylénique, de préférence choisi parmi les (méth)acrylate de méthyle, (méth)acrylate d'éthyle, (méth)acrylate de propyle, (méth)acrylate de butyle, (méth)acrylate de 2-éthyl-hexyle, et leurs combinaisons,
d3) un composé à insaturation éthylénique et porteur d'un groupe amino primaire ou secondaire, de préférence choisi parmi les (méth)acrylamide, chlorhydrate de (méth)acrylate de 2-amino-éthyle, chlorhydrate de 2-amino-éthyl-(méth)acrylamide, N-éthyl-(méth)acrylamide, chlorhydrate de N-(3-amino-propyl)-(méth)-acrylamide, N-(hydroxy-éthyl)-(méth)acrylamide, N-[3-(diméthyl-amino)-propyl]-(méth)acrylamide, [3-(méthacryloyl-amino)-propyl]-triméthyl-ammonium, N-[tris(hydroxy-méthyl)-méthyl]-(méth)acrylamide, N-phényl-acrylamide, alkyl-acrylamide, chlorhydrate de méthacrylamide-poly(éthylène-glycol)-amine, et leurs combinaisons,
et leurs combinaisons.

9. Procédé de préparation d'un latex de polymère pour utilisation dans des adhésifs, comprenant :
le fait de faire polymériser en émulsion par voie radicalaire un mélange de monomères à insaturation éthylénique qui comprend :
a) un monomère vinyl-aromatique,
b) un monomère diène conjugué,
c) et un monomère à insaturation éthylénique porteur d'un groupe fonctionnel acide et/ou d'un groupe fonctionnel hydroxyle,
et dans lequel le rapport pondéral du monomère vinyl-aromatique (a) au monomère diène conjugué (b) se situe dans l'intervalle allant de 1,60 à 2,30,
lequel latex de polymère présente une taille médiane de particules d'au moins 220 nm, cette taille médiane de particules étant déterminée par diffusion dynamique de la lumière selon la norme ISO 22412:2017.

10. Procédé conforme à la revendication 9, dans lequel le rapport pondéral du monomère vinyl-aromatique (a) au monomère diène conjugué (b) se situe dans l'intervalle allant de 1,70 à 2,10,
et/ou dans lequel le total des proportions du monomère vinyl-aromatique (a) et du monomère diène conjugué (b) se situe dans l'intervalle allant de 85,0 à 99,0 % en poids, et de préférence de 90,0 à 98,0 % en poids, par rapport au poids total des monomères présents dans le mélange de monomères.

11. Procédé conforme à la revendication 9 ou 10, dans lequel le mélange de monomères à insaturation éthylénique comprend au moins l'un ou plus d'un des suivants, ou tous les suivants :
a) de 40 à 80 % en poids, de préférence de 50 à 75 % en poids,
et mieux encore de 55 à 70 % en poids de monomère vinyl-aromatique,
lequel monomère vinyl-aromatique (a) est de préférence choisi parmi les styrène, alpha-méthyl-styrène et vinyl-toluène et leurs combinaisons, et mieux encore, est du styrène ;
b) de 15 à 50 % en poids, de préférence de 20 à 45 % en poids,
et mieux encore de 25 à 40 % en poids de monomère diène conjugué,
lequel monomère diène conjugué (b) est de préférence choisi parmi les suivants : 1,3-butadiène, isoprène, 2,3-diméthyl-1,3-butadiène, 2-chloro-1,3-butadiène, 1,3-pentadiène, 1,3-hexadiène, 2,4-hexadiène, 1,3-octadiène, 2-méthyl-1,3-pentadiène, 2,3-diméthyl-1,3-pentadiène, 3,4-diméthyl-1,3-hexadiène, 2,3-diéthyl-1,3-butadiène, 4,5-diéthyl-1,3-octadiène, 3-butyl-1,3-octadiène, 3,7-diméthyl-1,3,6-octatriène, 2-méthyl-6-méthylène-1,7-octadiène, 7-méthyl-3-méthylène-1,6-octadiène, 1,3,7-octatriène, 2-éthyl-1,3-butadiène, 2-amyl-1,3-butadiène, 3,7-diméthyl-1,3,7-octatriène, 3,7-diméthyl-1,3,6-octatriène, 3,7,11-triméthyl-1,3,6,10-dodécatétraène, 7,11-diméthyl-3-méthylène-1,6,10-dodécatriène, 2,6-diméthyl-2,4,6-octatriène, 2-phényl-1,3-butadiène, 2-méthyl-3-isopropyl-1,3-butadiène, 1,3-cyclohexadiène, myrcène, ocimène, farnésène et leurs combinaisons, et mieux encore, parmi les 1,3-butadiène, isoprène et leurs combinaisons, et même encore mieux, est du 1,3-butadiène ;
c) et de 0,5 à 5,0 % en poids, de préférence de 1,0 à 4,0 % en poids, et mieux encore de 1,0 à 3,0 % en poids de monomère à insaturation éthylénique porteur d'un groupe fonctionnel acide et/ou d'un groupe fonctionnel hydroxyle,
lequel monomère à insaturation éthylénique porteur d'un groupe fonctionnel acide (c) est de préférence choisi parmi les monomères de type acide carboxylique à insaturation éthylénique, les monomères de type acide sulfonique à insaturation éthylénique, et les monomères de type acide phosphoré à insaturation éthylénique, mieux encore parmi les suivants : acide acrylique, acide méthacrylique, acide crotonique, acide fumarique, acide itaconique, acide maléique, anhydride maléique, acide vinyl-acétique, acide vinyl-lactique, acide vinyl-sulfonique, acide styrène-sulfonique, acrylate ou méthacrylate de 2-carboxy-éthyle, vinyl-sulfonate de phényle, 4-vinyl-benzènesulfonate de sodium, acide 2-méthyl-2-propène-1-sulfonique, acide 2-propène-1-sulfonique, acide 4-styrènesulfonique, acide 2-acrylamido-2-méthyl-1-propanesulfonique, acide vinyl-phosphonique, vinyl-phosphonate de diméthyle, vinyl-phosphonate de diéthyle, allyl-phosphonate de diméthyle, acide allyl-phosphonique, et leurs combinaisons, et même encore mieux, parmi l'acide acrylique, l'acide méthacrylique, l'acide itaconique et leurs combinaisons,
lequel monomère à insaturation éthylénique porteur d'un groupe fonctionnel hydroxyle (c) est de préférence choisi parmi les suivants : alcool allylique, alcool vinylique, N-hydroxyméthyl-(méth)acrylamide, 1-pentène-3-ol, esters d'hydroxy-alkyle d'acides à insaturation éthylénique, tels les (méth)acrylate d'hydroxy-éthyle, (méth)acrylate d'hydroxy-propyle, (méth)acrylate d'hydroxy-butyle, et acrylate d'hydroxy-éthyl-caprolactone, et leurs combinaisons, mieux encore parmi les esters d'hydroxy-alkyle d'acides à insaturation éthylénique, tels les (méth)acrylate d'hydroxy-éthyle, (méth)acrylate d'hydroxy-propyle, (méth)acrylate d'hydroxy-butyle, et acrylate d'hydroxy-éthyl-capro-lactone, et même encore mieux parmi les (méth)acrylate d'hydroxy-éthyle, (méth)acrylate d'hydroxy-propyle et (méth)acrylate d'hydroxy-butyle et leurs combinaisons,
et lequel monomère à insaturation éthylénique porteur de groupes fonctionnels acide et hydroxyle (c) est de préférence choisi comme étant de l'acide 3-allyloxy-2-hydroxy-propane-1-sulfonique ;
étant entendu que les pourcentages en poids sont rapportés au poids total des monomères présents dans le mélange de monomères.

12. Procédé conforme à l'une des revendications 9 à 11, dans lequel le mélange de monomères à insaturation éthylénique comprend de 0,05 à 3,0 % en poids, de préférence de 0,10 à 2,0 % en poids et mieux encore de 0,15 à 1,5 % en poids d'un agent de transfert de chaîne, ce pourcentage pondéral étant rapporté à la quantité totale des monomères présents dans le mélange, lequel agent de transfert de chaîne est de préférence choisi parmi les suivants : n-dodécyl-mercaptan, tétrachlorure de carbone, tétrabromure de carbone, bromo-trichloro-méthane, 4-méthyl-benzènethiol, 3-mercapto-propionate d'isooctyle, tertiononyl-mercaptan, 4,4'-thio-bis(benzènethiol), tertiododécyl-mercaptan, dimère d'alpha-méthyl-styrène, acide thioglycolique, thioglycolate de 2-éthyl-hexyle, 3-mercapto-propionate de butyle, 1,8-dimer-capto-3,6-dioxa-octane et leurs combinaisons, et mieux encore, est du tertiodocécyl-mercaptan.

13. Procédé conforme à l'une des revendications 9 à 12, dans lequel le latex de polymère présente une taille médiane de particules d'au moins 230 nm, et mieux encore d'au moins 250 nm.

14. Utilisation d'un latex de polymère, conforme à l'une des revendications 1 à 8 ou préparé selon un procédé conforme à l'une des revendications 9 à 13, pour la préparation d'une composition aqueuse d'adhésif, et de préférence, d'une composition aqueuse d'adhésif en deux composants.

15. Composition aqueuse d'adhésif comprenant :
i) un latex de polymère, conforme à l'une des revendications 1 à 8 ou préparé selon un procédé conforme à l'une des revendications 9 à 13,
ii) et un composé de type polyisocyanate.

16. Composition aqueuse d'adhésif, conforme à la revendication 15, dans laquelle le composé de type polyisocyanate (ii) englobe les suivants : toluène-diisocyanate, toluène-diisocyanate hydrogéné, méthylène-diphényl-diisocyanate, méthylène-diphényl-diisocyanate hydrogéné, triphénylméthane-triisocyanate, benzène-1,2,4-triisocyanate, polyméthylène-polyphényl-polyisocyanate, xylène-diisocyanate, tétraméthylxyxlylène-diisocyanate, hexaméthylène-1,6-diisocyanate, 2,2,4-triméthyl-hexaméthylène-diisocyanate, 2,4,4-triméthyl-hexaméthylène-diisocyanate, isophorone-diisocyanate et 4,4'-méthylène-bis(cyclohexyl-iso-cyanate,
et/ou qui comprend en outre un poly(alcool vinylique), un copolymère d'alcool vinylique et d'éthylène, un poly(alcool vinylique) modifié par silanol, un dérivé de cellulose tel que méthyl-cellulose, éthyl-cellulose, hydroxy-cellulose ou carboxy-cellulose, de la chitine, du chitosane, un amidon, un polyéthylèneglycol, un polypropylèneglycol, un poly(éther de vinyle), de la gélatine, de la caséine, de la cyclodextrine ou une combinaison de tels corps, mais de préférence, un poly(alcool vinylique).

17. Composition aqueuse d'adhésif, conforme à la revendication 15 ou 16, qui est une composition d'adhésif en deux composants dans laquelle un premier composant comprend le latex de polymère et, en option, un poly(alcool vinylique), un copolymère d'alcool vinylique et d'éthylène, un poly(alcool vinylique) modifié par silanol, un dérivé de cellulose tel que méthyl-cellulose, éthyl-cellulose, hydroxy-cellulose ou carboxy-cellulose, de la chitine, du chitosane, un amidon, un polyéthylèneglycol, un polypropylèneglycol, un poly(éther de vinyle), de la gélatine, de la caséine, de la cyclodextrine ou une combinaison de tels corps, mais de préférence, un poly(alcool vinylique), et un deuxième composant comprend le composé de type polyisocyanate.

18. Composition aqueuse d'adhésif, conforme à l'une des revendications 15 à 17, qui comprend de 1 à 50 % en poids, de préférence de 2 à 45 % en poids et mieux encore de 5 à 40 % en poids du composé de type polyisocyanate (ii), par rapport à la quantité totale des solides contenus dans la composition aqueuse d'adhésif.

19. Composition aqueuse d'adhésif, conforme à l'une des revendications 15 à 18, sous forme de colle à bois.

20. Procédé de préparation d'une composition aqueuse d'adhésif, comprenant le fait de prendre un latex de polymère (i), conforme à l'une des revendications 1 à 8 ou préparé selon un procédé conforme à l'une des revendications 9 à 13, et le fait de le mélanger avec un composé de type polyisocyanate (ii), étant entendu que la composition aqueuse d'adhésif est de préférence une colle à bois.
